# EUROPÄISCHE PATENTSCHRIFT

(11) **EP 2 875 259 B1**
(45) Veröffentlichungstag und Bekanntmachung des Hinweises auf die Patenterteilung: **16.10.2019**
(21) Anmeldenummer: 13731115.5
(22) Anmeldetag: 20.06.2013
(51) Int. Cl.: F16F 15/14

(54) **TILGERSCHWINGUNGSDÄMPFER UND DÄMPFERANORDNUNG**
TUNED MASS DAMPER AND DAMPER ASSEMBLY
AMORTISSEUR D'OSCILLATIONS ET DISPOSITIF D'AMORTISSEMENT

(30) Priorität: 19.07.2012 DE 102012212704
(43) Veröffentlichungstag der Anmeldung: 27.05.2015
(73) Patentinhaber: ZF Friedrichshafen AG, 88046 Friedrichshafen (DE)
(72) Erfinder: SCHIERLING, Bernhard, 97273 Kürnach (DE); FAUSS, Christoph, 97456 Dittelbrunn (DE); TRAUT, Michael, 97493 Bergrheinfeld (DE); RIDDER, Martin, 97421 Schweinfurt (DE)
(86) Internationale Anmeldenummer: PCT/EP2013/062844
(87) Internationale Veröffentlichungsnummer: WO 2014/012737

(56) Entgegenhaltungen:
- WO-A1-2013/117841
- DE-A1-102010 029 464
- DE-A1-102011 011 469

## Beschreibung

Ausführungsbeispiele beziehen sich auf einen Tilgerschwingungsdämpfer und eine Dämpferanordnung, die beispielsweise im Rahmen eines Antriebsstrangs eines Kraftfahrzeugs, beispielsweise eines Kraftfahrzeugs mit einem Verbrennungsmotor, eingesetzt werden können.

Im Bereich des Kraftfahrzeugbaus, aber auch in anderen Bereichen des Maschinen- und Anlagenbaus werden Dämpferanordnungen eingesetzt, die zur Dämpfung wenigstens eines Schwingungsanteils einer Drehbewegung und gegebenenfalls zur Übertragung eines Drehmoments der Drehbewegung verwendet werden. So werden entsprechende Dämpferanordnungen beispielsweise im Bereich des Fahrzeugbaus im Rahmen von Antriebssträngen von Kraftfahrzeugen eingesetzt, bei denen es beispielsweise konzeptionsbedingt zu Abweichungen von einer gleichmäßigen oder gleichförmigen Drehbewegung kommen kann.

Im Falle eines Antriebsstrangs eines Kraftfahrzeugs können entsprechende Abweichungen von einer gleichmäßigen oder gleichförmigen Drehbewegung beispielsweise durch eine Entfaltungscharakteristik des Drehmoments eines Verbrennungsmotors hervorgerufen werden. Um diese von nachfolgenden Komponenten, beispielsweise einem Getriebe, einem Differenzial oder anderen entsprechenden Komponenten eines Antriebsstrangs zu entkoppeln, zumindest jedoch zu dämpfen, werden dort Dämpferanordnungen zum Einsatz gebracht.

Solche Drehschwingungsdämpfer sind beispielsweise in der DE 10 2004 011 830 A1 beschrieben. Bei den dort beschriebenen Drehschwingungsdämpfern wird ein geteiltes Schwungrad mit wenigstens zwei entgegen dem Widerstand von Energiespeicherelementen, insbesondere Schraubendruckfedern, relativ zueinander verdrehbaren Schwungmassen und mit mindestens zwei über den Umfang verteilten Tilgermassen verwendet. Die Tilgermassen sind durch wenigstens ein Bauteil mit einer Schwungmasse fliehkraftmäßig mithilfe von Wälzkörpern abgestützt.

Auch die DE 10 2010 054 297 A1 bezieht sich auf eine Kompensationsvorrichtung für Drehschwingungen für einen Antriebsstrang eines Kraftfahrzeugs mit einer Brennkraftmaschine und einem Getriebe mit einem Fliehkraftpendel. Die Kompensationsvorrichtung umfasst so ein Flanschteil und beidseitig zu diesem und radial zu diesem begrenzt in Umfangsrichtung verschwenkbare Pendelmassen.

Auch die DE 10 2009 042 825 A1 bezieht sich auf eine Drehmomentübertragungseinrichtung im Antriebsstrang eines Kraftfahrzeugs mit einer Drehschwingungsdämpfereinrichtung und einer Fliehkraftpendeleinrichtung. Um einen Schutz der Umgebung des Fliehkraftpendels bei einem Bersten desselben und um einen Schutz des Fliehkraftpendels gegenüber Außeneinwirkungen zu ermöglichen, wird eine Kapselung der Pendelmassen zumindest radial außerhalb derselben vorgeschlagen.

Die DE 10 2010 029 464 A1 bezieht sich auf eine Torsionsschwingungsdämpfungsvorrichtung für einen Antriebsstrang eines Kraftfahrzeugs mit einer Schwingungsdämpfervorrichtung. Die Schwingungsdämpfervorrichtung umfasst zwei Trägerscheiben und dazwischen angeordnete und radial zu diesen verschwenkbare Auslenkungsmassen.

Im Bereich entsprechender Dämpferanordnungen treten zu der grundsätzlichen Herausforderung, eine Dämpfung wenigstens eines Schwingungsanteils einer Drehbewegung zu realisieren, häufig eine Vielzahl weiterer Randbedingungen hinsichtlich Konstruktion, Funktion und anderer Parameter. So besteht beispielsweise ein Bedarf daran, einen Kompromiss zwischen einem Bauraum, einer Charakteristik, einer Belastbarkeit und anderer Parameter einer Dämpferanordnung zu verbessern.

Diesem Bedarf tragen ein Tilgerschwingungsdämpfer gemäß Patentanspruch 1 und eine Dämpferanordnung gemäß Patentanspruch 10 Rechnung.

Ein Tilgerschwingungsdämpfer gemäß einem Ausführungsbeispiel, beispielsweise für einen Antriebsstrang eines Kraftfahrzeugs, der ausgebildet ist, um einen Schwingungsanteil einer Drehbewegung zu dämpfen und ein Drehmoment der Drehbewegung zu übertragen, umfasst wenigstens eine Tilgermasse, die derart ausgebildet ist, um in Abhängigkeit von der Drehbewegung eine Schwingung auszuführen, um den Schwingungsanteil derselben zu dämpfen. Der Tilgerschwingungsdämpfer umfasst ferner ein erstes Führungsbauteil und ein sich im Wesentlichen parallel zu dem ersten Führungsbauteil erstreckendes zweites Führungsbauteil, zwischen denen die Tilgermasse beweglich angeordnet ist. Der Tilgerschwingungsdämpfer umfasst ferner wenigstens eine Verbindungsstruktur, die das erste Führungsbauteil und das zweite Führungsbauteil im Wesentlichen drehfest miteinander verbindet, wobei das erste Führungsbauteil, das zweite Führungsbauteil und die Verbindungsstruktur derart ausgebildet und angeordnet sind, sodass das Drehmoment über die Verbindungsstruktur übertragen wird. So kann das Drehmoment beispielsweise von dem ersten Führungsbauteil über die Verbindungsstruktur übertragen werden. Hierbei kann optional und beispielsweise zumindest über einen örtlich beschränkten Bereich oder Abschnitt das Drehmoment auch über das zweite Führungsbauteil übertragen werden. Ein solcher Tilgerschwingungsdämpfer gemäß einem Ausführungsbeispiel kann beispielsweise im Rahmen einer Dämpferanordnung eingesetzt werden.

Einem Tilgerschwingungsdämpfer gemäß einem Ausführungsbeispiel liegt so die Erkenntnis zugrunde, dass ein Kompromiss zwischen einem Bauraum und anderen Parametern einer Dämpferanordnung dadurch verbessert werden kann, indem das zu übertragende Drehmoment über die die beiden Führungsbauteile verbindende Verbindungsstruktur übertragen wird. Hierdurch kann es möglich sein, einen Tilgerschwingungsdämpfer kompakter auszulegen und so eine Verbesserung des zuvor genannten Kompromisses im Hinblick auf eine effizientere Ausnutzung des zur Verfügung stehenden Bauraums zu erzielen.

Optional kann bei einem Tilgerschwingungsdämpfer gemäß einem Ausführungsbeispiel die wenigstens eine Verbindungsstruktur wenigstens ein Abstandsstück, beispielsweise eine Abstandshülse, umfassen, wobei das Abstandsstück mit dem ersten und dem zweiten Führungsbauteil verbunden ist. Die Verbindungsstruktur kann so also als separates Bauteil ausgeführt werden, welches hinsichtlich der auf es einwirkenden Belastungen und Kräfte gezielter abstimmbar ist. Auch hierdurch kann somit gegebenenfalls der zuvor genannte Kompromiss im Hinblick auf eine Belastbarkeit und/oder ein Gewicht des Tilgerschwingungsdämpfers gemäß einem Ausführungsbeispiel verbessert werden.

Optional kann bei einem Tilgerschwingungsdämpfer gemäß einem Ausführungsbeispiel die wenigstens eine Verbindungsstruktur wenigstens einen Verbindungsabschnitt des ersten oder des zweiten Führungsbauteils umfassen, der mit dem anderen Führungsbauteil in Anlage steht und mit dem anderen Führungsbauteil drehfest verbunden ist. Die Verbindungsstruktur kann so beispielsweise auch integral bzw. einteilig mit dem ersten und/oder dem zweiten Führungsbauteil gebildet sein. Hierdurch kann es gegebenenfalls möglich sein, eine Konstruktion eines Tilgerschwingungsdämpfers gemäß einem Ausführungsbeispiel weiter zu vereinfachen, indem eine Anzahl von Einzelteilen desselben reduziert wird. Auch hier kann die entsprechende Verbindung wiederum formschlüssig, stoffschlüssig und/oder kraftschlüssig erfolgen. Hierbei wird unter einer einstückig ausgebildeten Komponente eine solche verstanden, die genau aus einem zusammenhängenden Materialstück gefertigt ist. Der Begriff "einstückig" kann daher synonym mit den Begriffen "integral" oder "einteilig" verwendet werden.

Die Verbindung kann beispielsweise stoffschlüssig, kraftschlüssig und/oder formschlüssig erfolgen. Hierbei kommt eine kraftschlüssige oder reibschlüssige Verbindung durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Optional kann bei einem Tilgerschwingungsdämpfer gemäß einem Ausführungsbeispiel die drehfeste Verbindung eine Nietverbindung, eine Schweißverbindung und/oder eine Passstiftverbindung umfassen. Hierdurch kann es möglich sein, eine Konstruktion bzw. einen Aufbau eines Tilgerschwingungsdämpfers gemäß einem Ausführungsbeispiel zu vereinfachen und somit einen Kompromiss hinsichtlich dieser Aspekte gegebenenfalls zuverbessern.

Erfindungsgemäß ist bei einem Tilgerschwingungsdämpfer gemäß einem Ausführungsbeispiel eine Nabenscheibe einer Zweimassenschwungradanordnung als erstes Führungsbauteil ausgeführt, wobei die Nabenscheibe über wenigstens eine Federanordnung mit einer Eingangsseite der Zweimassenschwungradanordnung derart gekoppelt ist, sodass das Drehmoment von der Eingangsseite über die wenigstens eine Federanordnung zu der Nabenscheibe übertragen wird. Anders ausgedrückt kann der Tilgerschwingungsdämpfer gemäß einem Ausführungsbeispiel optional als Teil einer Dämpferanordnung ausgeführt sein, die beispielsweise ferner eine Zweimassenschwungradanordnung umfasst. In einem solchen Fall kann also das erste Führungsbauteil als Nabenscheibe der Zweimassenschwungradanordnung ausgeführt sein. Hierdurch kann gegebenenfalls eine Drehmomentführung vereinfacht oder verbessert werden. Alternativ oder ergänzend kann es gegebenenfalls auch möglich sein, einen Bauraumbedarf eines Tilgerschwingungsdämpfers bzw. einer entsprechenden Dämpferanordnung weiter zu reduzieren bzw. einen entsprechenden Kompromiss zu verbessern.

Optional kann bei einem Tilgerschwingungsdämpfer gemäß einem Ausführungsbeispiel das zweite Bauteil mit einem abtriebsseitigen Bauteil des Tilgerschwingungsdämpfers, beispielsweise einer Abtriebsnabe derart gekoppelt sein oder diese derart umfassen, sodass das Drehmoment an das abtriebsseitige Bauteil übertragbar ist. Auch hierdurch kann gegebenenfalls ein Bauraumbedarf eines Tilgerschwingungsdämpfers gemäß einem Ausführungsbeispiel weiter reduziert und/oder ein entsprechender Kompromiss weiter verbessert werden.

Erfindungsgemäß ist bei einem Tilgerschwingungsdämpfer gemäß einem Ausführungsbeispiel eine ausgangsseitige Schwungmasse einer Zweimassenschwungradanordnung mit dem zweiten Führungsbauteil gekoppelt. Alternativ oder ergänzend ist bei einem solchen Tilgerschwingungsdämpfer gemäß einem Ausführungsbeispiel die ausgangsseitige Schwungmasse der Zweimassenschwungradanordnung als zweites Führungsbauteil ausgestaltet. Hierdurch kann es möglich sein, den Tilgerschwingungsdämpfer gemäß einem Ausführungsbeispiel und die Zweimassenschwungradanordnung wenigstens teilweise zu integrieren und so eine Anzahl von Bauteilen gegebenenfalls zu reduzieren. Hierdurch kann es möglich sein, eine Montage zu vereinfachen, eine Belastung zu erhöhen und/oder einen Bauraumbedarf zu reduzieren. Auch hierdurch kann somit der vorgenannte Kompromiss gegebenenfalls weiter verbessert werden.

Optional kann ein Tilgerschwingungsdämpfer gemäß einem Ausführungsbeispiel wenigstens einen Wälzkörper umfassen, wobei das erste Führungsbauteil und das zweite Führungsbauteil jeweils wenigstens eine Führungslaufbahn umfassen, die zusammen mit der Tilgermasse derart ausgebildet sind, dass die Tilgermasse durch ein Abrollen des wenigstens einen Wälzkörpers auf den Führungslaufbahnen der Führungsbauteile geführt wird. So kann optional auch die Tilgermasse beispielsweise wenigstens eine Laufbahn umfassen, auf der der wenigstens eine Wälzkörper abrollt. Das erste und das zweite Führungsbauteil ermöglichen so eine dynamische Führung der wenigstens einen Tilgermasse, sind also im Falle einer solchen Implementierung eines Tilgerschwingungsdämpfers gemäß einem Ausführungsbeispiel nicht mit der Tilgermasse statisch verbunden.

Optional kann bei einem solchen Tilgerschwingungsdämpfer gemäß einem Ausführungsbeispiel die Tilgermasse eine Führungslaufbahn aufweisen, die zu den Führungslaufbahnen des ersten und des zweiten Führungsbauteils korrespondiert und an der der wenigstens eine Wälzkörper bei dem Abrollen auf den Führungslaufbahnen seinerseits abrollt, wobei die Führungslaufbahnen der Tilgermasse und des ersten und des zweiten Führungsbauteils derart ausgebildet sind, sodass sich bei einer Auslenkung der Tilgermasse in einer Umfangsrichtung des Tilgerschwingungsdämpfers relativ zu den Führungsbauteilen eine Verlagerung des Schwerpunkts der Tilgermasse entlang einer radialen Richtung ergibt.

Optional kann bei einem Tilgerschwingungsdämpfer gemäß einem Ausführungsbeispiel das erste und das zweite Führungsbauteil derart ausgebildet sein, um den Tilgerschwingungsdämpfer entlang einer Drehachse der Drehbewegung, also in einer axialen Richtung zu begrenzen. Das erste und das zweite Führungsbauteil können so beispielsweise zum Schutz vor einem Eindringen von Partikeln in den Tilgerschwingungsdämpfer ausgeführt sein. Hierdurch kann gegebenenfalls eine Betriebssicherheit des Tilgerschwingungsdämpfers gemäß einem Ausführungsbeispiel weiter verbessert werden.

Optional kann bei einem Tilgerschwingungsdämpfer gemäß einem Ausführungsbeispiel das erste und/oder das zweite Führungsbauteil aus einem blechartigen Werkstück hergestellt sein. Hierdurch kann eine Herstellung und/oder eine Montage eines Tilgerschwingungsdämpfers gemäß einem Ausführungsbeispiel gegebenenfalls erleichtert werden.

Eine Dämpferanordnung gemäß einem Ausführungsbeispiel, beispielsweise für einen Antriebsstrang eines Kraftfahrzeugs, die zur Dämpfung eines Schwingungsanteils einer Drehbewegung und Übertragung eines Drehmoments von einer Eingangsseite zu einer Ausgangsseite der Dämpferanordnung ausgebildet ist, umfasst einen Tilgerschwingungsdämpfer, der wenigstens eine Tilgermasse und wenigstens ein Führungsbauteil umfasst, wobei die wenigstens eine Tilgermasse und das wenigstens eine Führungsbauteil derart ausgebildet sind, sodass die Tilgermasse relativ zu dem wenigstens einen Führungsbauteil in Abhängigkeit von der Drehbewegung eine Schwingung ausführen kann, um den Schwingungsanteil derselben zu dämpfen. Die Dämpferanordnung umfasst ferner einen Aufnahmeabschnitt, der mit dem wenigstens einen Führungsbauteil des Tilgerschwingungsdämpfers drehfest gekoppelt ist und sich im Wesentlichen entlang einer Drehachse der Drehbewegung erstreckt. Die Dämpferanordnung umfasst ferner einen axialen Abschnitt, der mit der Eingangsseite oder der Ausgangsseite der Dämpferanordnung drehfest gekoppelt ist und sich im Wesentlichen entlang einer Drehachse der Drehbewegung erstreckt. Die Dämpferanordnung umfasst ferner ein Lager, das zwischen dem axialen Abschnitt und dem Aufnahmeabschnitt angeordnet und ausgebildet ist, um den axialen Abschnitt und den Aufnahmeabschnitt bezogen auf die Drehachse radial zu führen.

Einer Dämpferanordnung gemäß einem Ausführungsbeispiel liegt so die Erkenntnis zugrunde, dass ein Kompromiss, welcher einen Bauraum der Dämpferanordnung berücksichtigt, dadurch verbessert werden kann, indem zwischen den Aufnahmeabschnitt und den axialen Abschnitt ein Lager angeordnet ist, welches bezogen auf die Drehachse die beiden Abschnitte zueinander radial führt. Der Aufnahmeabschnitt ist hierbei mit dem Tilgerschwingungsdämpfer drehfest gekoppelt, während der axiale Abschnitt mit der Eingangsseite oder der Ausgangsseite der Dämpferanordnung gekoppelt ist. Je nach konkreter Implementierung einer Dämpferanordnung gemäß einem Ausführungsbeispiel kann so beispielsweise das Lager eine Drehbewegung zwischen der Eingangsseite und der Ausgangsseite der Dämpferanordnung vermitteln bzw. führen, wenn der Tilgerschwingungsdämpfer mit der Seite der Eingangsseite und der Ausgangsseite der Dämpferanordnung drehfest gekoppelt ist, mit der der axiale Abschnitt gerade nicht drehfest gekoppelt ist. Durch diese Anordnung kann so eine radiale Abstützung im Rahmen der Dämpferanordnung zwischen Eingangsseite und Ausgangsseite erzielt werden, wobei aufgrund der Ausgestaltung des Lagers hierdurch gegebenenfalls ein radialer Bauraum effizienter genutzt oder eingespart werden kann. Auch hierdurch kann somit der oben genannte Kompromiss verbessert werden.

So kann optional bei einer Dämpferanordnung gemäß einem Ausführungsbeispiel das Lager auch so ausgebildet sein, dass der axiale Abschnitt und der Aufnahmeabschnitt bezogen auf die Drehachse im Wesentlichen ausschließlich radial geführt werden. Es kann also optional gegebenenfalls ein Lager derart verwendet werden, welches eine axiale Führung nicht übernimmt.

Optional kann bei einer Dämpferanordnung gemäß einem Ausführungsbeispiel die Ausgangsseite der Dämpferanordnung drehfest mit dem Aufnahmeabschnitt gekoppelt sein oder diesen umfassen. Alternativ oder ergänzend hierzu kann bei einer Dämpferanordnung gemäß einem Ausführungsbeispiel das Lager bezogen auf die Tilgermasse des Tilgerschwingungsdämpfers radial innen angeordnet sein. So kann optional hierzu alternativ oder ergänzend bei einer Dämpferanordnung gemäß einem Ausführungsbeispiel das Lager entlang einer Drehrichtung der Drehbewegung einen Überlapp von wenigstens 40 % mit der Tilgermasse des Tilgerschwingungsdämpfers aufweisen.

Optional kann eine Dämpferanordnung gemäß einem Ausführungsbeispiel ferner einen Stützring aufweisen, der den Aufnahmeabschnitt radial umschließt und derart angeordnet und ausgebildet ist, um mit der wenigstens einen Tilgermasse bei einem Stillstand der Dämpferanordnung in Kontakt zu treten und ein hierbei entstehendes Geräusch zu dämpfen. Hierdurch kann es gegebenenfalls möglich sein, einen zur Verfügung stehenden Bauraum dadurch besser zu nutzen, indem gegebenenfalls die Tilgermassen größer ausgeführt werden können, wobei gegebenenfalls bei einem Stillstand der Dämpferanordnung auftretende Geräusche durch den Stützring reduziert oder sogar unterbunden werden können.

Optional kann bei einer Dämpferanordnung gemäß einem Ausführungsbeispiel der Stützring eine Erstreckung entlang der Drehachse aufweisen, die wenigstens 50 % einer Erstreckung der Tilgermasse entlang der Drehachse entspricht. Hierdurch kann es gegebenenfalls möglich sein, eine Geräuschentwicklung zuverlässiger zu unterbinden, zumal eine entsprechende Implementierung gegebenenfalls ohne einen zusätzlichen axialen Bauraum erfolgen kann, da dieser beispielsweise durch die Tilgermasse selbst bereits eingenommen wird. Es kann gegebenenfalls vielmehr sogar möglich sein, durch eine Verlängerung der Erstreckung des Stützrings bezogen auf die Erstreckung der Tilgermasse den Stützring dünner auszuführen, sodass zusätzlicher radialer Bauraum für einzelne Komponenten der Dämpferanordnung zur Verfügung stehen kann. So kann es gegebenenfalls ratsam sein, das vorgenannte Verhältnis von wenigstens 50 % auf wenigstens 60 %, wenigstens 80 %, wenigstens 90 % oder wenigstens 100 % zu erhöhen. Optional können hierbei der Stützring und der Tilgermasse sich im Wesentlichen axial überdecken.

Optional kann bei einer Dämpferanordnung gemäß einem Ausführungsbeispiel ein kleinster radialer Abstand des Lagers von der Drehachse wenigstens 80 % eines radialen Abstands der Tilgermasse des Tilgerschwingungsdämpfers von der Drehachse während des Betriebs der Dämpferanordnung aufweisen. Anders ausgedrückt kann das Lager radial nahe an dem Tilgerschwingungsdämpfer bzw. seiner Tilgermasse angeordnet sein. Hierdurch kann es möglich sein, eine radial kompakte und damit einen radialen Bauraum einsparende Implementierung einer Dämpferanordnung gemäß einem Ausführungsbeispiel zu schaffen.

Optional kann eine Dämpferanordnung gemäß einem Ausführungsbeispiel ferner eine Zweimassenschwungradanordnung umfassen, die eine Eingangsseite, eine Ausgangsseite und wenigstens eine Federanordnung umfasst, die derart ausgebildet sind, sodass das Drehmoment von der Eingangsseite der Zweimassenschwungradanordnung über die wenigstens eine Federanordnung zu der Ausgangsseite der Zweimassenschwungradanordnung übertragen wird. Der Tilgerschwingungsdämpfer und die Zweimassenschwungradanordnung sind bei einem solchen Ausführungsbeispiel derart angeordnet, dass die wenigstens eine Tilgermasse bezogen auf eine Drehachse der Drehbewegung radial weiter innen liegt als die wenigstens eine Federanordnung. Hierdurch kann es gegebenenfalls möglich sein, den Tilgerschwingungsdämpfer als Teil der Zweimassenschwungradanordnung auszubilden, wobei der Tilgerschwingungsdämpfer radial weiter innen liegend als die Federanordnung der Zweimassenschwungradanordnung angeordnet ist. Hierdurch kann es möglich sein, die Federanordnung der Zweimassenschwungradanordnung aufgrund des größeren Radius gezielter auf ihren Einsatz hin auszulegen. Ebenso kann durch die entsprechende Anordnung beispielsweise die Masse der Tilgermasse der Zweimassenschwungradanordnung zugerechnet werden, sodass diese durch die Masse der Tilgermasse gegebenenfalls erhöht wird. Es kann so gegebenenfalls eine kompaktere und damit bauraumeffizientere bzw. einen entsprechenden Kompromiss verbessernde Lösung implementierbar sein.

Selbstverständlich kann optional bei einer Dämpferanordnung gemäß einem Ausführungsbeispiel ein Tilgerschwingungsdämpfer gemäß einem Ausführungsbeispiel, wie dieser zuvor beschrieben wurde, als entsprechender Tilgerschwingungsdämpfer implementiert sein. Hierdurch kann es gegebenenfalls möglich sein, den vorgenannten Kompromiss weiter zu verbessern.

Eine Komponente kann beispielsweise eine n-zählige Rotationssymmetrie aufweisen, wobei n eine natürliche Zahl größer oder gleich 2 ist. Eine n-zählige Rotationssymmetrie liegt dann vor, wenn die betreffende Komponente beispielsweise um eine Rotations- oder Symmetrieachse um (360°/n) drehbar ist und dabei im Wesentlichen formenmäßig in sich selbst übergeht, also bei einer entsprechenden Drehung im Wesentlichen auf sich selbst im mathematischen Sinn abgebildet wird. Im Unterschied hierzu geht bei einer vollständigen rotationssymmetrischen Ausgestaltung einer Komponente bei einer beliebigen Drehung um jeden beliebigen Winkel um die Rotations- oder Symmetrieachse die Komponente formenmäßig im Wesentlichen in sich selbst über, wird also im mathematischen Sinn im Wesentlichen auf sich selbst abgebildet. Sowohl eine n-zählige Rotationssymmetrie wie auch eine vollständige Rotationssymmetrie wird hierbei als Rotationssymmetrie bezeichnet.

Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Hierbei umfasst eine mechanische Kopplung zweier Komponenten sowohl eine unmittelbare, wie auch eine mittelbare Kopplung.

Nachfolgend werden unter Bezugnahme auf die beigefügten Figuren Ausführungsbeispiele näher beschrieben.
- Fig. 1: zeigt eine Teilaufrissdarstellung einer Dämpferanordnung gemäß einem Ausführungsbeispiel;
- Fig. 2: zeigt eine Querschnittsdarstellung durch die in Fig. 1 gezeigte Dämpferanordnung entlang einer Schnittebene A-A;
- Fig. 3: zeigt eine Aufsicht auf einen Tilgerschwingungsdämpfer gemäß einem Ausführungsbeispiel;
- Fig. 4: zeigt eine Querschnittsdarstellung durch den in Fig. 3 gezeigten Tilgerschwingungsdämpfer entlang einer Schnittebene B-B;
- Fig. 5: zeigt eine perspektivische Darstellung des Tilgerschwingungsdämpfers aus den Fig. 3 und 4;
- Fig. 6: zeigt eine Aufsicht auf eine mehrteilig ausgeführte Tilgermasse mit vormontierten Wälzkörpern eines Tilgerschwingungsdämpfers gemäß einem Ausführungsbeispiel;
- Fig. 7: zeigt eine perspektivische Darstellung der Tilgermasse aus Fig. 6;
- Fig. 8: zeigt eine Querschnittsdarstellung durch die in den Fig. 6 und 7 gezeigten Tilgermasse entlang der Schnittebene B-B;
- Fig. 9: zeigt eine Querschnittsdarstellung durch die Tilgermasse aus den Fig. 6 und 7 entlang der Querschnittsebene A-A;
- Fig. 10: zeigt eine Querschnittsdarstellung durch einen Wälzkörper eines Tilgerschwingungsdämpfers gemäß einem Ausführungsbeispiel;
- Fig. 11: zeigt eine vergrößerte Darstellung eines ersten Freistichs des in Fig. 10 gezeigten Wälzkörpers;
- Fig. 12: zeigt eine vergrößerte Darstellung eines zweiten Freistichs des Wälzkörpers aus Fig. 10;
- Fig. 13: zeigt eine Querschnittsdarstellung eines Wälzkörpers eines Tilgerschwingungsdämpfers gemäß einem weiteren Ausführungsbeispiel;
- Fig. 14: zeigt eine vergrößerte Darstellung eines ersten Freistichs des in Fig. 13 gezeigten Wälzkörpers;
- Fig. 15: zeigt eine vergrößerte Darstellung eines zweiten Freistichs des in Fig. 13 gezeigten Wälzkörpers;
- Fig. 16: zeigt eine Querschnittsdarstellung durch einen Wälzkörper eines Tilgerschwingungsdämpfers gemäß einem Ausführungsbeispiel;
- Fig. 17: zeigt eine vergrößerte Darstellung eines Krümmungsradius im Bereich eines Übergangs zwischen einer Laufbahn und einem Bund des Wälzkörpers aus Fig. 16;
- Fig. 18: zeigt eine vergrößerte Darstellung eines Übergangsbereichs zwischen einer weiteren Laufbahn und einem weiteren Bund des in Fig. 16 gezeigten Wälzkörpers;
- Fig. 19: zeigt eine Querschnittsdarstellung durch eine Dämpferanordnung gemäß einem Ausführungsbeispiel;
- Fig. 20: zeigt eine vergrößerte Darstellung durch den Tilgerschwingungsdämpfer gemäß einem Ausführungsbeispiel der Dämpferanordnung aus Fig. 19;
- Fig. 21: zeigt eine vergrößerte Darstellung einer Anbindung eines axialen Abschnitts der Dämpferanordnung aus Fig. 19;
- Fig. 22: zeigt eine Querschnittsdarstellung durch eine Dämpferanordnung gemäß einem weiteren Ausführungsbeispiel;
- Fig. 23: zeigt eine vergrößerte Querschnittsdarstellung durch den Tilgerschwingungsdämpfer der Dämpferanordnung aus Fig. 22;
- Fig. 24: zeigt eine vergrößerte Darstellung einer Anbindung eines axialen Abschnitts der Dämpferanordnung aus Fig. 22;
- Fig. 25: zeigt eine Querschnittsdarstellung durch eine Dämpferanordnung gemäß einem weiteren Ausführungsbeispiel;
- Fig. 26: zeigt eine vergrößerte Querschnittsdarstellung durch den Tilgerschwingungsdämpfer der Dämpferanordnung aus Fig. 25;
- Fig. 27: zeigt eine vergrößerte Darstellung einer Anbindung eines axialen Abschnitts der Dämpferanordnung aus Fig. 25;
- Fig. 28: zeigt eine Querschnittsdarstellung durch eine Dämpferanordnung gemäß einem weiteren Ausführungsbeispiel;
- Fig. 29: zeigt eine vergrößerte Querschnittsdarstellung durch den Tilgerschwingungsdämpfer der Dämpferanordnung aus Fig. 28;
- Fig. 30: zeigt eine vergrößerte Darstellung einer Anbindung eines axialen Abschnitts der Dämpferanordnung aus Fig. 28;
- Fig. 31: zeigt eine Querschnittsdarstellung durch eine Dämpferanordnung gemäß einem Ausführungsbeispiel; und
- Fig. 32: zeigt ein Flussdiagramm eines Verfahrens zum Bereitstellen eines Tilgerschwingungsdämpfers.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

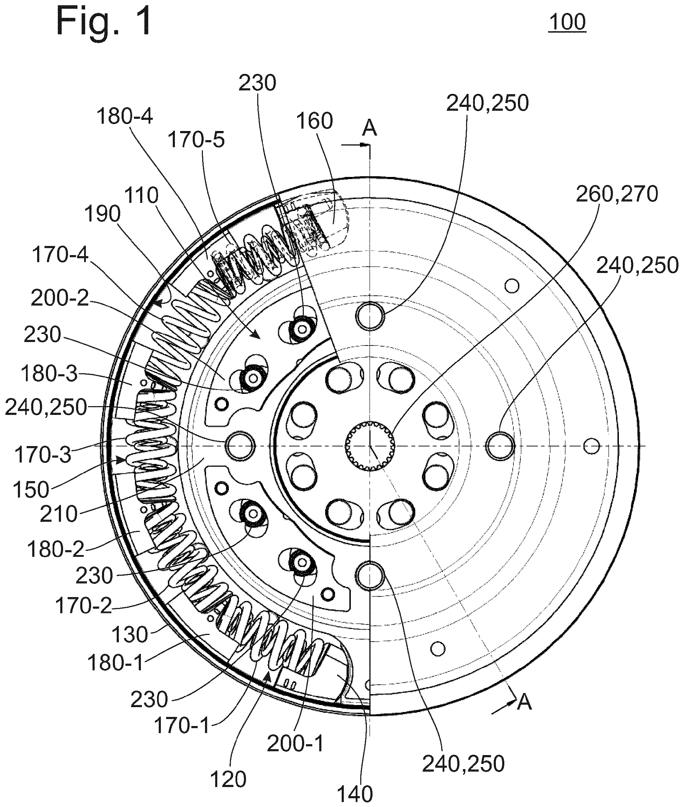

Fig. 1 zeigt eine teilweise Aufsicht durch eine Dämpferanordnung 100 gemäß einem Ausführungsbeispiel, welche einen Tilgerschwingungsdämpfer 110 sowie eine Zweimassenschwungradanordnung 120 umfasst. Ein Gehäuse 130 der Dämpferanordnung 100 dient hierbei als Eingangsseite der Dämpferanordnung 100 sowie der Zweimassenschwungradanordnung 120.

Die Zweimassenschwungradanordnung 120 ist dem Tilgerschwingungsdämpfer 110 eingangsseitig vorgeschaltet. Wird so eine Drehbewegung, welche ein entsprechendes Drehmoment überträgt, auf das Gehäuse 130, also die Eingangsseite der Dämpferanordnung 100, übertragen, wird diese über ein erstes Anlagebauteil 140 auf eine Federanordnung 150 übertragen, die mit einer Nabenscheibe 160 mechanisch gekoppelt ist. Die Nabenscheibe 160 stellt hierbei eine Ausgangsseite der Zweimassenschwungradanordnung 120 dar.

Die Federanordnung 150 umfasst bei dem in Fig. 1 gezeigten Ausführungsbeispiel einer Dämpferanordnung 100 eine Mehrzahl von Federelementen 170, wobei die Dämpferanordnung 100 aus Fig. 1 fünf entsprechende Federelemente 170-1, ..., 170-5 umfasst. Die Federelemente 170 sind hierbei teilweise unterschiedlich ausgestaltet. So umfassen die Federelemente 170-1, 170-2, 170-3 und 170-5 beispielsweise zwei konzentrisch ausgeführte Schrauben- bzw. Tonnenfedern. Das Federelement 170-4, welches zwischen den Federelementen 170-3 und 170-5 angeordnet ist, ist bei dem hier gezeigten Ausführungsbeispiel einer Dämpferanordnung 100 als einfache Schrauben- bzw. Tonnenfeder ausgestaltet. Selbstverständlich können bei anderen Ausführungsbeispielen anstelle der hier gezeigten Federelemente 170 auch andere Federelemente, beispielsweise Bogenfedern, auf Elastomeren basierende Federelemente oder auch pneumatische Federelemente eingesetzt werden.

Zwischen den betreffenden Federelementen 170 sind hierbei jeweils Zwischenbauteile 180-1, ..., 180-4 angeordnet. Die Zwischenbauteile 180 werden auch als Gleitschuhe bezeichnet und treten aufgrund von auf sie wirkenden Zentrifugalkräften mit einer Innenlaufbahn 190 des Gehäuses 130 in Kontakt. Hierdurch tritt in der Federanordnung 150 eine Reibwirkung und damit eine Dämpfung auf.

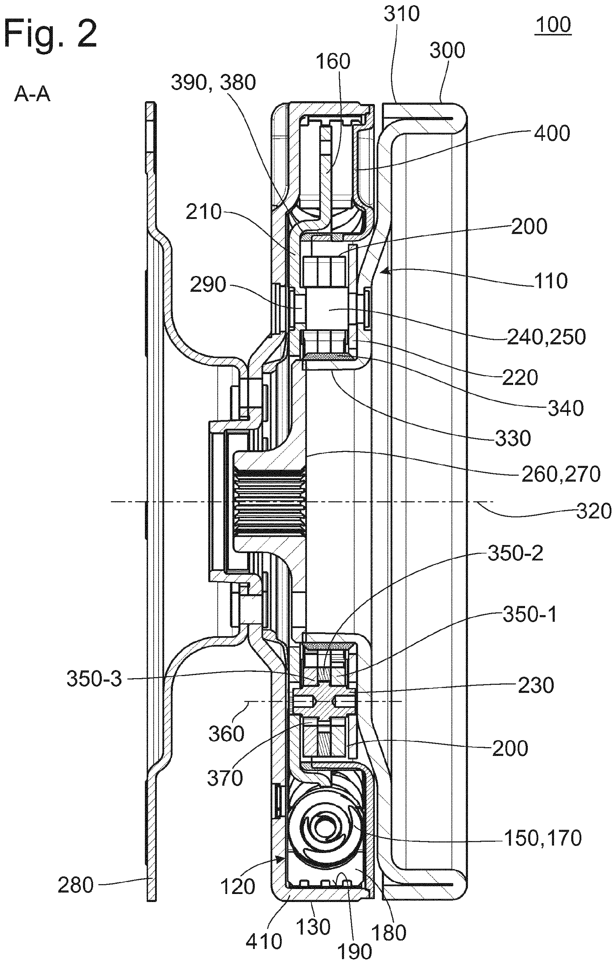

Der Tilgerschwingungsdämpfer 110 bildet, wie zuvor bereits erwähnt wurde, eine zweite Stufe der Dämpferanordnung 100. Der Tilgerschwingungsdämpfer 110 umfasst hierbei wenigstens eine, im vorliegenden Fall vier Tilgermassen 200, von denen jedoch aufgrund der in Fig. 1 gewählten Darstellung nur zwei, nämlich die als Tilgermassen 200-1 und 200-2 bezeichneten, erkennbar sind. Die Tilgermassen 200 werden hierbei über ein erstes Führungsbauteil 210 und ein zweites Führungsbauteil 220 (nicht gezeigt in Fig. 1) über mehrere Wälzkörper 230 geführt. Das erste Führungsbauteil 210 ist hierbei integral mit der Nabenscheibe 160 ausgeführt, wie dies beispielsweise im Zusammenhang mit Fig. 2 noch näher erläutert werden wird. Der nähere Aufbau der Tilgermassen 200, der Führungsbauteile und der Wälzkörper 230 wird im weiteren Verlauf der Beschreibung, beispielsweise im Zusammenhang mit den Fig. 2 bis 12 für das in Fig. 1 gezeigte Ausführungsbeispiel noch näher beschrieben.

Ein Tilgerschwingungsdämpfer 110 wird hierbei häufig zur weiteren Erhöhung des Fahrkomforts bzw. zur weiteren Unterdrückung von Schwingungen in einem Antriebsstrang eines Kraftfahrzeugs verwendet. Bei Tilgerschwingungsdämpfern 110, die häufig auch einfach als Schwingungstilger bzw. Tilger bezeichnet werden, werden - allgemein gesprochen - Zusatzmassen beweglich in das Antriebssystem angekoppelt, sodass durch eine Bewegung dieser Zusatzmassen eine Schwingungsamplitude bzw. ein Schwingungsanteil einer Drehbewegung gedämpft wird. Die Wirkungsweise eines Tilgerschwingungsdämpfers beruht dabei beispielsweise darauf, dass das schwingungsfähige System, welches eine Hauptmasse und die zuvor beschriebenen Zusatzmassen umfasst, bezüglich seiner Eigenfrequenz so abgestimmt ist, dass bei einer bestimmten Erregerfrequenz die auch nachfolgend als Tilgermassen bezeichneten Zusatzmassen eine erzwungene Schwingung ausführen, während die Hauptmasse im Wesentlichen in Ruhe bleibt. Hierdurch können entsprechende Schwingungsfrequenzen effizient reduziert, gegebenenfalls sogar unterdrückt werden.

Um eine Schwingungsunterdrückung über einen größeren Drehzahlbereich zu erreichen, werden häufig auch drehzahladaptive Tilgerschwingungsdämpfer 110 verwendet, deren Eigenfrequenz bzw. Resonanzfrequenz sich drehzahlabhängig, beispielsweise proportional zu der Drehzahl, ändert. Zumindest konventionell wird hierbei über den Tilgerschwingungsdämpfer 110 jedoch kein Drehmoment übertragen.

Die Tilgermassen 200 sind hierbei zwischen dem ersten Führungsbauteil 210 und dem sich im Wesentlichen parallel zu diesem erstreckenden zweiten Führungsbauteil 220 also über die Wälzkörper 230 derart beweglich geführt, sodass die Tilgermassen 200 eine Schwingungsbewegung bzw. eine Schwingung ausführen können, um einen Schwingungsanteil einer in die Dämpferanordnung 100 bzw. den Tilgerschwingungsdämpfer 110 eingangsseitig eingeleitete Drehbewegung zu dämpfen.

Um diese Ausgestaltung und Anordnung der beiden Führungsbauteile 210, 220 sowie der Tilgermassen 200 zu implementieren, weist der Tilgerschwingungsdämpfer 110 wenigstens eine Verbindungsstruktur 240, genauer gesagt bei dem in Fig. 1 gezeigten Ausführungsbeispiel vier Verbindungsstrukturen 240 auf, die die beiden Führungsbauteile 210, 220 drehfest miteinander verbinden und über die das Drehmoment der Drehbewegung übertragen bzw. geführt wird. Die Verbindungsstrukturen 240 sind bei dem hier gezeigten Ausführungsbeispiel als Abstandsstücke, beispielsweise als Abstandshülsen, implementiert. Bei anderen Ausführungsbeispielen können die Verbindungsstrukturen 240 jedoch nicht nur als separate Bauteile, sondern auch einteilig bzw. einstückig mit anderen Komponenten, beispielsweise den Führungsbauteilen 210, 220, ausgeführt werden. Während bei dem hier gezeigten Ausführungsbeispiel die ausgangsseitige Schwungmasse der Zweimassenschwungradanordnung 120 mit dem zweiten Führungsbauteil 220 gekoppelt ist, kann ergänzend oder alternativ die ausgangsseitige Schwungmasse der Zweimassenschwungradanordnung 120 auch als zweites Führungsbauteil 220 ausgestaltet sein.

Unabhängig von der konkreten Implementierung der Verbindungsstrukturen 240 können die Führungsbauteile 210, 220 mithilfe unterschiedlicher Verbindungstechniken miteinander verbunden werden. Hierbei können grundsätzlich kraftschlüssige, stoffschlüssige und/oder formschlüssige Verbindungen zum Einsatz kommen. So können die Führungsbauteile beispielsweise besonders effizient über Nietverbindungen, Schweißverbindungen und/oder Passstiftverbindungen miteinander drehfest verbunden werden.

Das Drehmoment, welches über das Gehäuse 130 eingangsseitig in die Dämpferanordnung 100 eingeleitet und über die Zweimassenschwungradanordnung 120 an die Nabenscheibe 160 übertragen wird, wird so über die Zweimassenschwungradanordnung 120 in den Tilgerschwingungsdämpfer 110 eingeleitet. Dort fließt das Drehmoment über die Nabenscheibe 160 bzw. das erste Führungsbauteil 210 über die Verbindungsstrukturen 240 und gegebenenfalls über einen räumlich beschränkten Bereich des zweiten Führungsbauteils 220 zu einem abtriebsseitigen Bauteil 260 des Tilgerschwingungsdämpfers 110 und - im vorliegenden Ausführungsbeispiel - der Dämpferanordnung 100. Das abtriebsseitige Bauteil 260 ist hier eine Abtriebsnabe 270.

Fig. 2 zeigt eine Querschnittsdarstellung durch die Dämpferanordnung 100 aus Fig. 1 entlang der gewinkelt ausgeführten Schnittebene entlang der Linie A-A in Fig. 1. So zeigt Fig. 2, dass die Dämpferanordnung 100 im vorliegenden Fall eine Anbindungsstruktur 280 aufweist, die mit dem Gehäuse 130 drehfest verbunden ist und eine Einleitung der Drehbewegung und des damit verbundenen Drehmoments auf das Gehäuse 130 ermöglicht. Die Anbindungsstruktur 280 ist bei dem hier gezeigten Ausführungsbeispiel derart ausgebildet, sodass diese eine Anbindung der Dämpferanordnung 100 an ein Antriebsaggregat oder eine Antriebseinheit eines Kraftfahrzeugs ermöglicht. Die Anbindungsstruktur 280 wird so auch als elastisches Verbindungselement bezeichnet, welches beispielsweise ausgebildet sein kann, um einen axialen Abstand zwischen der Dämpferanordnung 100 und der Antriebseinheit zu überbrücken und/oder gegebenenfalls auftretende Taumelschwingungen oder Taumelbewegungen abzufangen bzw. auszugleichen und zu dämpfen.

Fig. 2 zeigt darüber hinaus, dass die Nabenscheibe 160 und das erste Führungsbauteil 210 im vorliegenden Fall als ein gemeinsames Bauteil ausgeführt sind. Die Verbindungsstruktur 240, also das Abstandsstück 250, ist bei dem hier gezeigten Ausführungsbeispiel mit dem ersten Führungsbauteil 210 und dem zweiten Führungsbauteil 220 über eine Nietverbindung 290 miteinander drehfest verbunden. Die zuvor genannten Alternativen können hierbei ergänzend oder alternativ implementiert werden. Selbstverständlich können grundsätzlich auch andere kraft-, form- und/oder stoffschlüssige Verbindungstechniken eingesetzt werden.

Die Nietverbindung 290 verbindet darüber hinaus das zweite Führungsbauteil 220 mit einer sekundären Schwungmasse 300, die im vorliegenden Ausführungsbeispiel als blechartiges Bauteil ausgeführt ist. Die sekundäre Schwungmasse 300 ist hierbei funktional der Zweimassenschwungradanordnung 120 zugeordnet und dient zur Erhöhung der abtriebsseitigen Masse. Sie weist an einem radial außen liegenden Bereich einen umgebogenen Abschnitt 310 auf, durch den ein Trägheitsmoment der sekundären Schwungmasse 300 ohne einen signifikanten Zuwachs hinsichtlich des axialen Bauraums erhöht werden kann.

Die sekundäre Schwungmasse 300 erstreckt sich hierbei in radialer Richtung auf eine Drehachse 320 der Drehbewegung über die Position der Tilgermassen 200 hinaus und weist einen zu diesen radial innen liegenden Aufnahmeabschnitt 330 auf, über den die sekundäre Schwungmasse 300 mit dem abtriebsseitigen Bauteil 260, also der Abtriebsnabe 270, verbunden ist. Der Aufnahmeabschnitt 330 erstreckt sich hierbei im Wesentlichen parallel zu der Drehachse 320, verläuft also im Wesentlichen axial.

An einer den Tilgermassen 200 zugewandten Seite, also radial außen liegend, weist der Aufnahmeabschnitt 330 ferner einen Stützring 340 auf, der den Aufnahmeabschnitt 330 im Wesentlichen radial umschließt und derart angeordnet und ausgebildet ist, sodass die Tilgermassen 200 bei einem Stillstand der Dämpferanordnung 100 mit diesen in Kontakt treten können und dass ein hierbei entstehendes Geräusch gedämpft wird. Der Stützring 340 kann so beispielsweise aus einem elastischen Material bzw. einem teilelastischen Material, beispielsweise einem Kunststoff oder einem Gummi, gefertigt sein.

So weist auch bei diesem Ausführungsbeispiel einer Dämpferanordnung 100 die Zweimassenschwungradanordnung 120 eine Eingangsseite, eine Ausgangsseite und wenigstens eine Federanordnung 150 auf, die derart ausgebildet sind, sodass ein eingeleitetes Drehmoment von der Eingangsseite der Zweimassenschwungradanordnung 120 über die Federanordnung 150 zu der Ausgangsseite der Zweimassenschwungradanordnung 120 übertragen wird. Das Schmiermittel ist hierbei - wie erwähnt - der Federanordnung 150 zugeordnet und kann beispielsweise der Schmierung derselben, beispielsweise zu einer Reduzierung einer gegebenenfalls auftretenden Reibung gegenüber anderen Bauteilen, beispielsweise Aufnahmebauteil und/oder Gleitbauteilen, dienen. Das Schmiermittel kann ein Schmierfett oder auch ein anderes Schmiermittel mit einer einem Schmierfett vergleichbaren Viskosität aufweisen. Die Tilgermasse 200 liegt hier bezogen auf die Drehachse 320 radial weiter innen als die Federanordnung 150.

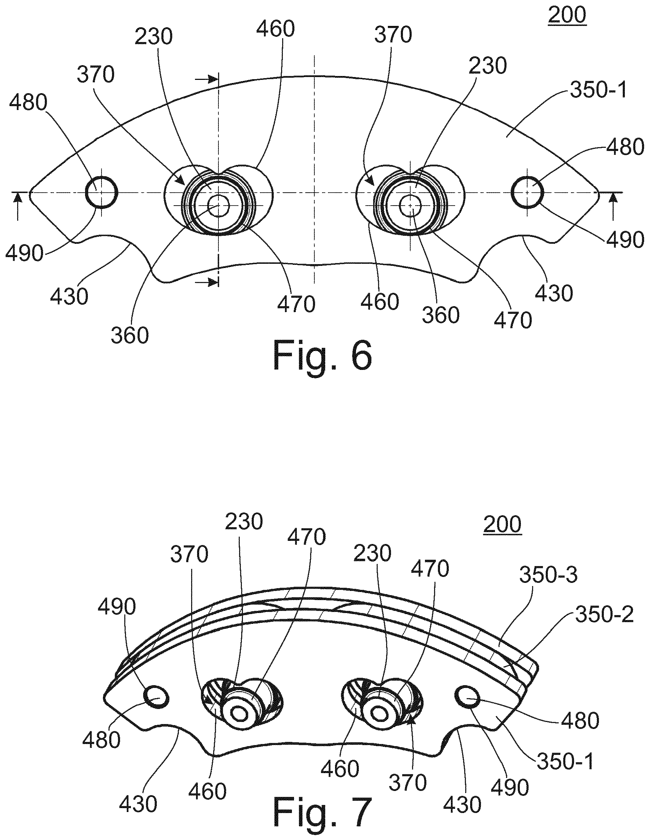

Wie beispielsweise die in Fig. 2 unterhalb der Drehachse 320 eingezeichnete Ausgestaltung der Tilgermassen 200 zeigt, weisen die Tilgermassen 200 bei diesem Ausführungsbeispiel wenigstens zwei im Wesentlichen plattenförmige Einzeltilgermassen 340 auf, die im Wesentlichen parallel zueinander und im Wesentlichen parallel zu den beiden Führungsbauteilen 210, 220 angeordnet sind. Genauer gesagt weist das hier gezeigte Ausführungsbeispiel Tilgermassen 200 auf, die jeweils drei Einzeltilgermassen 350-1, 350-2 und 350-3 aufweisen, wobei die Einzeltilgermasse 350-2 zwischen den Einzeltilgermassen 350-1 und 350-3 angeordnet ist. Wie im Zusammenhang mit den Fig. 6 und 7 noch näher beschrieben werden wird, können die Einzeltilgermassen 350 optional mechanisch miteinander verbunden werden. Dies kann beispielsweise über wenigstens einen Passstift, wenigstens einen Spannstift, wenigstens eine Vernietung und/oder eine Verschweißung erfolgen.

Die beiden äußeren Einzeltilgermassen 350-1, 350-3, die dem zweiten Führungsbauteil 220 bzw. dem ersten Führungsbauteil 210 zugewandt sind, sind im hier gezeigten Ausführungsbeispiel aus einem härtbaren Werkstoff gefertigt und gehärtet. Hierdurch kann gegebenenfalls ein Verschleiß bzw. eine Änderung der Form und/oder der Massen der Tilgermassen 200 gegebenenfalls unterbunden, zumindest jedoch reduziert werden, sollten die Tilgermassen 200 während des Betriebs mit den Führungsbauteilen 210, 220 in Kontakt treten. Entsprechend können auch die Führungsbauteile 210, 220 optional gehärtet werden. Ebenso können andere Beschädigungen an den Tilgermassen 200 oder den Führungsbauteilen 210, 220 gegebenenfalls reduziert oder unterbunden werden. Die Einzeltilgermasse 350-2, die zwischen den beiden äußeren Einzeltilgermassen 350-1, 350-3 angeordnet ist, kann jedoch zur Vereinfachung der Herstellung beispielsweise ungehärtet bleiben, auch wenn diese aus einem grundsätzlich härtbaren Werkstoff gefertigt ist.

Je nach konkreter Implementierung einer Dämpferanordnung 100 können die Tilgermassen 200 bzw. ihre Einzeltilgermassen und/oder die beiden Führungsbauteile 210, 220 unabhängig voneinander eine Gleitfläche, beispielsweise eine Kunststoffgleitfläche, oder eine Beschichtung aufweisen, die ausgebildet ist, um eine entsprechende Gleitreibung im Falle eines Berührens der betreffenden Bauteile zu reduzieren. Hierdurch kann es gegebenenfalls möglich sein, eine mechanische Verbindung der Einzeltilgermassen 350 der Tilgermassen 200 nicht zu implementieren und so gegebenenfalls eine Herstellung zu vereinfachen, ohne einen signifikanten Einfluss hinsichtlich Geräuschentwicklung oder anderer komfort- und/oder verschleißbedingter Parameter in Kauf nehmen zu müssen.

Bei dem hier gezeigten Ausführungsbeispiel einer Dämpferanordnung 100 bzw. eines Tilgerschwingungsdämpfers 110 sind die Einzeltilgermassen 350 jedoch, wie zuvor bereits erwähnt wurde, mechanisch miteinander verbunden. Hierdurch ist es möglich, die mittlere Einzeltilgermassen 350-2 derart auszuformen, sodass diese eine Führung der gesamten Tilgermasse 200 durch den Wälzkörper 230 ermöglicht.

So weisen die Tilgermassen 200 eine entlang einer Rotationsachse 360 der Wälzkörper 230 durchgehende Ausnehmung 370 auf, durch die der Wälzkörper 230 zu beiden Seiten hindurchtritt. Entsprechend weisen auch die Einzeltilgermassen 350 im Bereich der durchgehenden Ausnehmung 370 ihrerseits durchgehende Teilausnehmungen auf, die zusammen die durchgehende Ausnehmung 370 wenigstens teilweise bilden. Die mittlere Einzeltilgermasse 350-2 weist hierbei eine durchgehende Teilausnehmung auf, die beispielsweise einen größeren Durchmesser oder eine andere größere charakteristische Größe aufweist als die äußeren Einzeltilgermassen 350-1, 350-3, sodass diese bezogen auf die mittlere Einzeltilgermasse 350-2 einen Bund bzw. eine Anlagefläche bilden, über die eine Führung der Tilgermasse 200 möglich ist. Details hierzu und zu der Ausgestaltung des Wälzkörpers 230 werden jedoch im Zusammenhang mit den weiteren Figuren noch erläutert.

Um eine Reibung der Federelemente 170, jedoch auch anderer Komponenten der Zweimassenschwungradanordnung 120 zu reduzieren, weist diese typischerweise ein Schmiermittel auf. Anders ausgedrückt ist das Schmiermittel der Federanordnung zugeordnet und dient der Schmierung der Federanordnung, um beispielsweise eine Reduzierung einer gegebenenfalls auftretenden Reibung gegenüber Aufnahmebauteilen, Gleitbauteilen und/oder anderen Bauteilen zu ermöglichen. Um nun ein Vordringen dieses Schmiermittels, bei dem es sich beispielsweise um ein Schmierfett oder auch ein anderes entsprechendes hochviskoses Schmiermittel handeln kann, in den Tilgerschwingungsdämpfer 110 bzw. in einen Zwischenraum der Tilgermasse 200 und wenigstens einen der Führungsbauteile 210, 220 zu unterbinden, weist die Dämpferanordnung 100 eine Dichtungsstruktur 380 auf, die gerade ein Vordringen des Schmiermittels aus der Zweimassenschwungradanordnung 120 an alle Tilgermassen 200 der Dämpferanordnung 100 unterbinden soll. Der Tilgerschwingungsdämpfer 110 und die Zweimassenschwungradanordnung 120 sind hierbei so angeordnet, dass die Tilgermassen 200 bezogen auf die Drehachse 320 der Drehbewegung radial weiter innen liegen als die wenigstens eine Federanordnung 150.

Die Dichtungsstruktur 380 umfasst hierbei wenigstens eine Spaltdichtung 390 und/oder eine Labyrinthdichtung, die im vorliegenden Ausführungsbeispiel durch einen Spalt zwischen einem Abdeckblech 400 und der Nabenscheibe 160, also dem ersten Führungsbauteil 210, gebildet wird. Das Abdeckblech 400 bildet hierbei zusammen mit einer Gehäuseschale 410 das Gehäuse 130.

Die Dichtungsstruktur 380 ist hierbei nun gerade so angeordnet und ausgebildet, dass ein Eindringen des Schmiermittels aus der Zweimassenschwungradanordnung 120 in die Zwischenräume zwischen den Führungsbauteilen 210, 220 und den an diesen geführten Tilgermassen 200 der Dämpferanordnung 100 unterbunden wird. Hierdurch ist es möglich, ein Schwingverhalten der Tilgermassen 200 konstanter im Hinblick auf Alterungsprozesse und andere parasitäre Effekte zu machen, die auf ein Eindringen des Schmiermittels in den Tilgerschwingungsdämpfer 110 zurückzuführen sein könnten.

Das Abdeckblech 400 ist hierbei aus einem blechartigen Werkstück gefertigt, kann jedoch grundsätzlich auch aus anderen Werkstoffen, beispielsweise einem Kunststoff oder einem anderen entsprechenden Werkstoff, gefertigt sein.

Der Einsatz einer entsprechenden Dichtungsstruktur 380 kann beispielsweise dann besonders sinnvoll sein, wenn der Tilgerschwingungsdämpfer 110 derart angeordnet ist, sodass das Drehmoment von der Zweimassenschwungradanordnung 120 über den Tilgerschwingungsdämpfer 110 zu der Ausgangsseite der Dämpferanordnung 100 übertragen wird. Im Falle einer solchen Anordnung kann es gegebenenfalls nicht möglich sein, eine vollständige Kapselung der Zweimassenschwungradanordnung 120 zu erzielen, da die Nabenscheibe 160, welche als Ausgangsseite der Zweimassenschwungradanordnung 120 dient, und der entsprechenden Eingangsseite der Zweimassenschwungradanordnung 120, also dem Gehäuse 130, möglich ist. Ebenso kann alternativ oder ergänzend der Einsatz einer entsprechenden Dichtungsstruktur 380 beispielsweise dann sinnvoll sein, wenn diese so ausgebildet ist, dass sie die wenigstens eine Tilgermasse 200 bezogen auf die Drehachse 320 der Drehbewegung axial, also entlang der Drehachse 320, im Wesentlichen überdeckt. Spalte, Ausnehmungen und andere Öffnungen der Dichtungsstruktur 380, die die Dichtfunktion nicht oder nur unwesentlichen beeinträchtigen bzw. diese sogar erst ermöglichen, bleiben hierbei unberücksichtigt. Die Dichtungsstruktur 380 kann so ein Vordringen des Schmiermittels zu den Tilgermassen 200 gegebenenfalls effizienter verhindern.

Bei der hier gezeigten Dämpferanordnung 100 weist so die Zweimassenschwungradanordnung 120 das Gehäuse 130 auf, das derart ausgestaltet ist, dass die Dichtungsstruktur 380 wenigstens teilweise durch einen Abschnitt, beispielsweise ein Abschnitt des Deckblechs 400 des Gehäuses 130 der Zweimassenschwungradanordnung 120 gebildet wird. Die Dichtungsstruktur 380 und das erste Führungsbauteil 210 sind hierbei derart ausgebildet, sodass diese die bereits zuvor genannte Spaltdichtung 390 und/oder eine Labyrinthdichtung miteinander bilden.

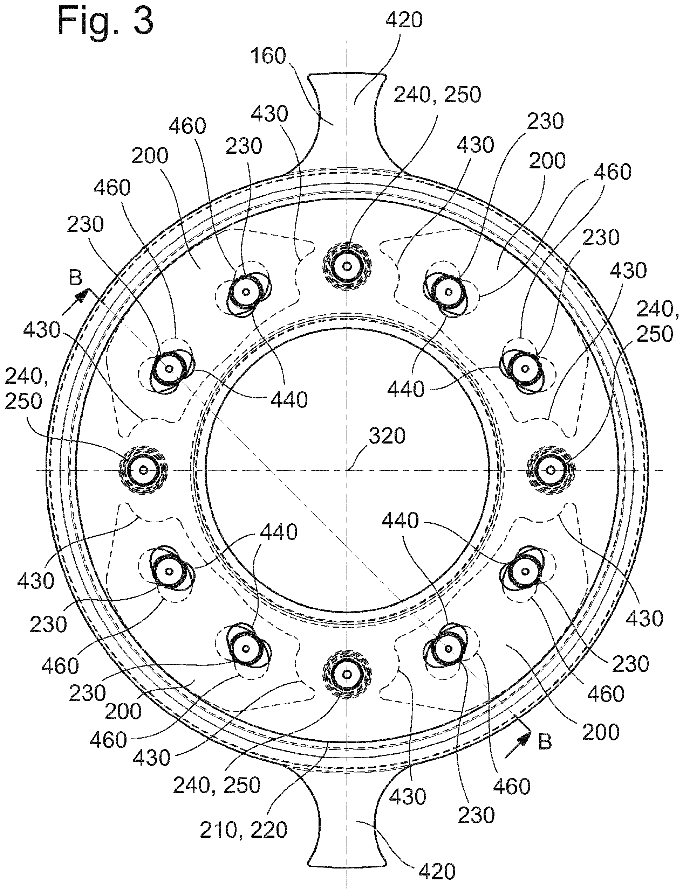

Fig. 3 zeigt eine Aufsicht auf die Nabenscheibe 160 zusammen mit den Wälzkörpern 230 und den Tilgermassen 200 des Tilgerschwingungsdämpfers 110 aus den Fig. 1 und 2. Die Nabenscheibe 160 weist hierbei radial nach außen abstehende Abschnitte 420 auf, über die die in Fig. 3 nicht gezeigten Federanordnungen 150 das Drehmoment auf die Nabenscheibe 160 übertragen.

Fig. 3 illustriert darüber hinaus, dass sowohl die vier Tilgermassen 200 wie auch die vier Verbindungsstrukturen 240 bzw. Abstandsstücke 250 regelmäßig unter einem Winkel von im Wesentlichen 90° bei dem vorliegenden Ausführungsbeispiel angeordnet sind. Selbstverständlich können sich diese hinsichtlich Anordnung, Anzahl und anderer Parameter bei anderen Ausführungsbeispielen unterscheiden.

An einer radial innen liegenden Seite der Tilgermassen 200 weisen diese eine konkave Kontur 430 auf, die derart ausgebildet und angeordnet ist, sodass auch bei einer Schwingung der Tilgermassen 200 diese nicht in Kontakt mit den Verbindungsstrukturen 240 bzw. den Abstandsstücken 250 geraten. Anders ausgedrückt sind diese derart ausgebildet, sodass ein Berühren der Tilgermassen 200 und der Verbindungsstrukturen 240 bzw. der Abstandsstücke 250 unterbunden wird.

Die Tilgermassen 200 werden hierbei an den beiden Führungsbauteilen 210, 220 über die Wälzkörper 230 geführt, sodass diese die bereits zuvor erwähnten Schwingungen ausführen können. Zu diesem Zweck weisen die Führungsbauteile 210, 220 jeweils wenigstens eine Führungslaufbahn 440 auf, die mit jeweils einer Laufbahn 450 (nicht gezeigt in Fig. 3) der Wälzkörper 230 derart in Kontakt steht, sodass die Wälzkörper 230 an diesen abrollen können. Zu diesem Zweck weisen auch die Tilgermassen 200 jeweils eine Führungslaufbahn 460 auf, die mit jeweils einer weiteren Laufbahn 470 (nicht gezeigt in Fig. 3) der Wälzkörper in Kontakt stehen, sodass diese über die genannten Laufbahnen aneinander abrollen können. Die Führungslaufbahnen 440 der beiden Führungsbauteile 210, 220 weisen hierbei eine im Wesentlichen nierenförmige Kontur auf, die auch die Führungslaufbahnen 460 der Tilgermassen 200 aufweisen. Jedoch sind die Führungslaufbahnen 440, 460, an denen ein gemeinsamer Wälzkörper 230 entlang abrollt, zueinander im Wesentlichen spiegelsymmetrisch ausgebildet. Selbstverständlich können bei anderen Ausführungsbeispielen die Geometrien der Führungslaufbahnen 440, 460 auch anders ausgeführt sein. Lediglich der Vollständigkeit halber soll bereits an dieser Stelle erwähnt werden, dass die Laufbahnen 450 und die weiteren Laufbahnen 470 der Wälzkörper 230 im Wesentlichen zylinderförmig bzw. kreisförmig ausgestaltet sind. So sind die Wälzkörper 230 im Wesentlichen rotationssymmetrisch bezüglich ihrer Rotationsachsen 360 ausgestaltet.

Anders ausgedrückt kann das erste Führungsbauteil 210 und das zweite Führungsbauteil 220 jeweils wenigstens eine Führungslaufbahn 440 umfassen, die zusammen mit der Tilgermasse 200 derart ausgebildet sind, sodass die Tilgermasse durch ein Abrollen des wenigstens einen Wälzkörpers 230 auf den Führungslaufbahnen 440 der Führungsbauteile 210, 220 geführt wird. Entsprechend können auch die Tilgermassen 200 entsprechende Laufbahnen 450 umfassen, auf denen der oder die Wälzkörper 230 abrollen.

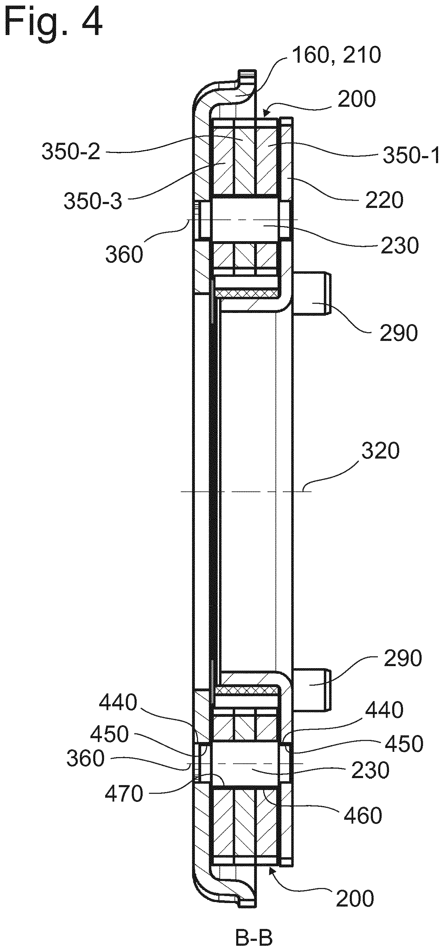

Fig. 4 zeigt eine Querschnittsdarstellung durch die in Fig. 3 gezeigte Anordnung entlang der in Fig. 3 eingezeichneten Schnittebene B-B. Sie illustriert, dass das erste und das zweite Führungsbauteil 210, 220 den Tilgerschwingungsdämpfer 110 in axialer Richtung, also entlang der Drehachse 320, begrenzen. Die Führungsbauteile 210, 220 dienen damit nicht nur der Führung der Tilgermassen 200, sondern vielmehr auch deren Schutz.

Wie bereits in Fig. 2 erkennbar war, sind bei dem hier beschriebenen Ausführungsbeispiel die ersten und zweiten Führungsbleche 210, 220 aus einem blechartigen Werkstück hergestellt. Hierdurch kann es möglich sein, die Herstellung der Dämpferanordnung 100 bzw. ihres Tilgerschwingungsdämpfers 110 dadurch zu vereinfachen, dass zur Herstellung der Führungsbauteile 210, 220 sowie gegebenenfalls auch der Einzeltilgermassen 350 nur solche Verfahren herangezogen werden müssen, die ein Verarbeiten von blechartigen Werkstücken erfordern. So können gegebenenfalls die betreffenden Strukturen durch ein Stanzen oder auch ein anderes entsprechendes Herstellungsverfahren fertigbar sein.

Selbstverständlich können jedoch die Führungslaufbahnen 440 der Führungsbauteile 210, 220 gegebenenfalls auch mittels anderer Herstellungsverfahren geformt werden. So kann beispielsweise wenigstens eines der Führungsbauteile 210, 220 auch mithilfe anderer Herstellungsverfahren, beispielsweise mittels eines Fräsens, hergestellt werden.

Darüber hinaus zeigt Fig. 4 die Nietverbindungen 290, mit deren Hilfe unter anderem die sekundäre Schwungmasse 300 befestigbar ist, in einem Zustand vor der eigentlichen Befestigung an derselben.

Darüber hinaus illustriert Fig. 4 ebenso die Interaktion der Wälzkörper 230 und ihrer Laufbahnen 450, 470 mit den Führungslaufbahnen der beiden Führungsbauteile 210, 220 sowie der Tilgermasse 200.

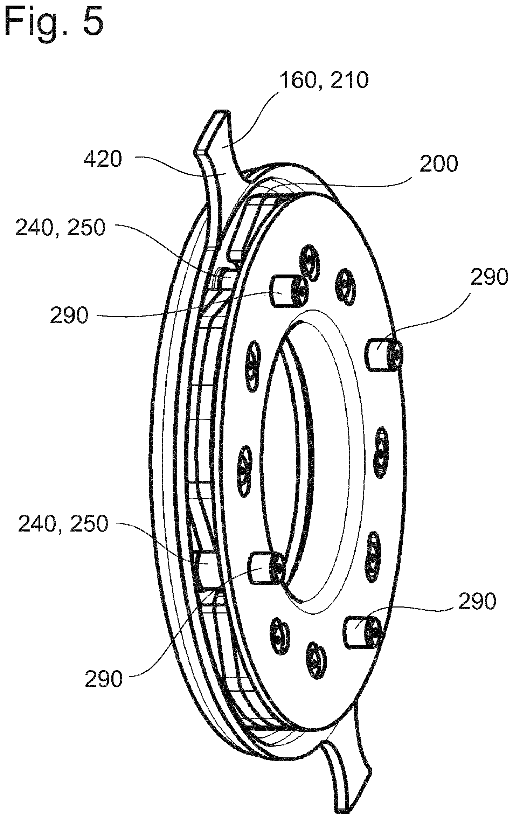

Fig. 5 zeigt schließlich eine perspektivische Darstellung der in den Fig. 3 und 4 gezeigten Anordnung, auf der beispielsweise das Zusammenwirken der Tilgermassen 200 und der Verbindungsstrukturen 240 bzw. Abstandsstücke 250 zu sehen ist.

Die Fig. 6, 7, 8 und 9 zeigen eine Seitenansicht, eine perspektivische Darstellung sowie zwei Schnittdarstellungen durch eine der Tilgermassen 200. Die Fig. 6 und 7 zeigen hierbei die im Wesentlichen nierenförmige bzw. herzförmige Ausgestaltung der Führungslaufbahn 460 der Tilgermasse 200. Aufgrund der entsprechenden Ausgestaltung ist es möglich, die Wälzkörper 230 gerade so auszuführen, dass diese nicht aus der durchgehenden Ausnehmung 370 herausfallen können. Zu diesem Zweck und zur leichteren Herstellbarkeit der Tilgermasse 200 ist diese aus den bereits zuvor erwähnten Einzeltilgermassen 350-1, 350-2 und 350-3 aufgebaut. Bei dem hier gezeigten Ausführungsbeispiel sind die Einzeltilgermassen 350 durch mehrere, genauer gesagt durch zwei Passstifte 480 verbunden, die in entsprechende Passbohrungen 490 eingreifen. Selbstverständlich können anstelle der Verwendung von Passstiften 480 und entsprechenden Passbohrungen 490 auch andere mechanische Verbindungstechniken eingesetzt werden, mit deren Hilfe die Einzeltilgermassen 350 zu der Tilgermasse 200 zusammengefügt werden.

Bei dem hier gezeigten Ausführungsbeispiel einer Tilgermasse 200 ist die mittlere Einzeltilgermasse 350-2 einteilig ausgeführt. Selbstverständlich kann jedoch beispielsweise auch mehrteilig ausgeführte Einzeltilgermassen 350 oder auch versetzt zueinander angeordnete verwendet werden. Je nach konkreter Implementierung kann so gegebenenfalls eine genauere Anpassung einer Masse der Tilgermasse 200 möglich sein.

Bei dem hier beschriebenen Ausführungsbeispiel einer Dämpferanordnung 100 bzw. einem Tilgerschwingungsdämpfer 110 sind die Wälzkörper 230 gerade so ausgebildet, dass diese einerseits eine Führung der Tilgermasse 200 bezogen auf die in den Fig. 6 bis 9 nicht gezeigten Führungsbauteile 210, 220 ermöglicht und andererseits ebenso gegen ein Herausfallen aus der Tilgermasse bzw. seiner durchgehenden Ausnehmung 370 gesichert sind.

Zu diesem Zweck ist die durchgehende Ausnehmung 370 der Tilgermasse 200 aus durchgehenden Teilausnehmungen 500-1, 500-2 und 500-3 ausgebaut, die sich hinsichtlich ihrer Ausdehnung senkrecht zu der Rotationsachse 360 der Wälzkörper 230 unterscheiden. Diese können beispielsweise durch ein Stanzen oder auch durch ein anderes entsprechendes Herstellungsverfahren geschaffen werden. So weist die durchgehende Teilausnehmung 500-2 der mittleren Einzeltilgermasse 350-2 eine solche Größe auf, sodass ein zentraler Abschnitt 510 des Wälzkörpers 230 sich in dieser ungehindert bewegen kann, während die weiteren Laufbahnen 470 des Wälzkörpers 230 auf den entsprechenden Führungslaufbahnen 460 der Tilgermasse 200 bewegen. Entsprechend weisen die durchgehenden Teilausnehmungen 500-1, 500-3 der beiden äußeren, den Führungsbauteilen 210, 220 zugewandten Einzeltilgermassen 350-1, 350-3 entsprechend kleinere Abmessungen auf, sodass ein weiterer Bund 520 in Anlage zu inneren Seitenflächen der Einzeltilgermassen 350-1, 350-3 treten kann. Der weitere Bund 520 bildet so zusammen mit diesen inneren Seitenflächen der Einzeltilgermassen 350-1, 350-3 einen Schutz gegen ein Herausfallen der Wälzkörper 230. Darüber hinaus wird die Tilgermasse 200 hierdurch im Inneren des Tilgerschwingungsdämpfers 110 zwischen den Führungsbauteilen 210, 220 in axialer Richtung geführt.

Zur seitlichen Führung der Tilgermassen 200 entlang der Drehachse 320 der Drehbewegung weisen die Wälzkörper 230 zwischen den Laufbahnen 450, die mit den Führungslaufbahnen 440 der Führungsbauteile 210, 220 in Kontakt stehen und den weiteren Laufbahnen 470, die mit den Führungslaufbahnen 460 der Tilgermassen 200 in Kontakt stehen, einen Bund 530 auf, der mit einer entsprechenden Anlagefläche an dem betreffenden Führungsbauteil 210, 220 anliegen kann und dort eine entsprechende Führung des Wälzkörpers 230 und damit der Tilgermasse 200 ermöglichen kann.

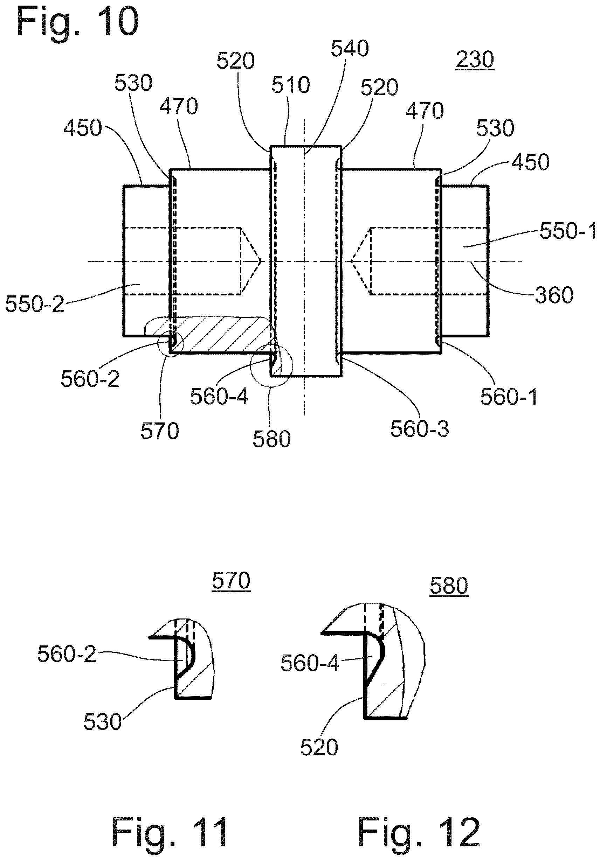

Zu diesem Zweck weisen die Wälzkörper 230 eine Geometrie auf, die im Zusammenhang mit den Fig. 10 bis 12 für die bisher beschriebenen Wälzkörper 230 näher ausgeführt werden soll.

Fig. 10 zeigt eine Seitenansicht eines Wälzkörpers 230, wie er beispielsweise im Rahmen des zuvor beschriebenen Ausführungsbeispiels einer Dämpferanordnung 100 mehrfach verwendet wird. Der Wälzkörper 230 ist, wie zuvor erläutert wurde, ausgebildet, um an dem ersten und dem zweiten Führungsbauteil 210, 220 um seine Rotationsachse 360 herum abzurollen, um so die Tilgermasse 200 zwischen diesen zu führen. Zu diesem Zweck weist der Wälzkörper 230 einen Durchmesser auf, der ausgehend von einer senkrecht auf der Rotationsachse 360 stehenden Ebene 540 zu beiden Seiten hin von einem Wert an der Ebene 540 zu einem kleineren Wert an seinen beiden Enden entlang der Rotationsachse 360 nicht zunimmt. Anders ausgedrückt nimmt ein Durchmesser ausgehend von einem Wert an der Ebene 540 zu einem kleineren Wert an seinen beiden Enden entlang der Rotationsachse 360 im mathematischen Sinne monoton ab. Hierbei ist jedoch der Unterschied zu einer streng monotonen Abnahme im mathematischen wichtig. Ausgehend von der Ebene 540 zu den beiden Seiten des Wälzkörpers 230 hin ist ein Wert des Durchmessers kleiner oder gleich einem anderen Wert des Durchmessers des Wälzkörpers 230, der auf der gleichen Seite der Ebene 540 näher an dieser liegt. Noch anders ausgedrückt nimmt der Wälzkörper 230 ausgehend von der Ebene 540 zu seinen Enden hin von dem Wert an der Ebene 540 zu dem kleineren Wert an seinen beiden Enden entlang der Rotationsachse 360 kontinuierlich und/oder in Stufen ab.

Die Ebene 540 kann dabei beispielsweise eine Mittelebene und/oder eine Symmetrieebene des Wälzkörpers 230 sein. So kann dieser beispielsweise bezüglich der Ebene 540 spiegelsymmetrisch sein.

Aufgrund der zuvor beschriebenen geometrischen Ausgestaltung der Ebene 540 liegt diese somit im Bereich des zentralen Abschnitts 510. An diesen schließt sich zu beiden Seiten der Ebene 540 bei dem hier gezeigten Wälzkörper 230 ein weiterer Bund 520 an, welcher den zentralen Abschnitt 510 von der benachbart angeordneten weiteren Laufbahn 470 trennt. Diese weist einen kleineren Durchmesser als der zentrale Abschnitt 510 auf.

An die weitere Laufbahn 470 schließt sich dann zu beiden Seiten der Ebene 540 jeweils der Bund 530 an, die in die Laufbahnen 450 münden.

Der Wälzkörper 230 weist so zu beiden Seiten der senkrecht zu der Rotationsachse 360 verlaufenden und den Wälzkörper 230 schneidenden Ebene 540 jeweils einen der Bünde 530 auf, die so ausgebildet sind, um mit dem ersten bzw. dem zweiten Führungsbauteil 210 in Kontakt zu treten, um den Wälzkörper 230 entlang der Drehachse 320 der Drehbewegung zu führen. Die Laufbahnen 450 können so mit den entsprechenden Führungslaufbahnen 440 der beiden Führungsbauteile 210, 220 in Kontakt stehen und an diesen abrollen, um die Tilgermasse zwischen den beiden Führungsbauteilen 210, 220 zu führen. Der Bund 530 ist somit zwischen der Ebene 540 und der Laufbahn 450 angeordnet und begrenzt sogar die Laufbahn 450 in Richtung der Ebene 540.

Der Wälzkörper 230 weist - wie oben beschrieben - ferner zu beiden Seiten der Ebene 540 jeweils wenigstens eine weitere Laufbahn 470 auf, sodass die weiteren Laufbahnen 470 auf einer oder mehreren Führungslaufbahnen 460 der Tilgermasse 200 abrollen können.

Darüber hinaus kann grundsätzlich auch der zentrale Abschnitt 510 zusätzlich oder alternativ als Laufbahn ausgestaltet sein. So kann bei einem Ausführungsbeispiel der Wälzkörper 230 eine die Ebene 540 unmittelbar schneidende weitere Laufbahn aufweisen, wobei in einem solchen Fall es gegebenenfalls ratsam sein kann, die Tilgermasse 200 ebenfalls so auszulegen, dass diese wenigstens eine Führungslaufbahn umfasst, sodass die weitere Laufbahn des Wälzkörpers 230 auf der Führungslaufbahn der Tilgermasse 200 abrollen kann. In einem solchen Fall kann optional eine Implementierung der weiteren Laufbahn 470, welche durch die weiteren Bünde 520 von dem zentralen Abschnitt 510 getrennt ist, entfallen. Anders ausgedrückt kann der Bund 530 zwischen der Laufbahn 450 und der im Bereich des zentralen Abschnitts 510 gebildeten weiteren Laufbahn angeordnet sein.

Im Falle einer solchen Implementierung kann es gegebenenfalls auch möglich sein, eine Tilgermasse 200 zu verwenden, die aus Einzeltilgermassen 350 aufgebaut ist oder diese zumindest umfasst, bei der jedoch die Einzeltilgermassen 350 nicht miteinander zu der Tilgermasse 200 verbunden sind. In einem solchen Fall kann es gegebenenfalls ratsam sein, die bereits zuvor beschriebenen Oberflächenmaßnahmen, beispielsweise das Vorsehen einer Gleitfläche, beispielsweise einer Kunststoffgleitfläche, oder eine Beschichtung vorzunehmen, die eine Gleitreibung reduzieren kann.

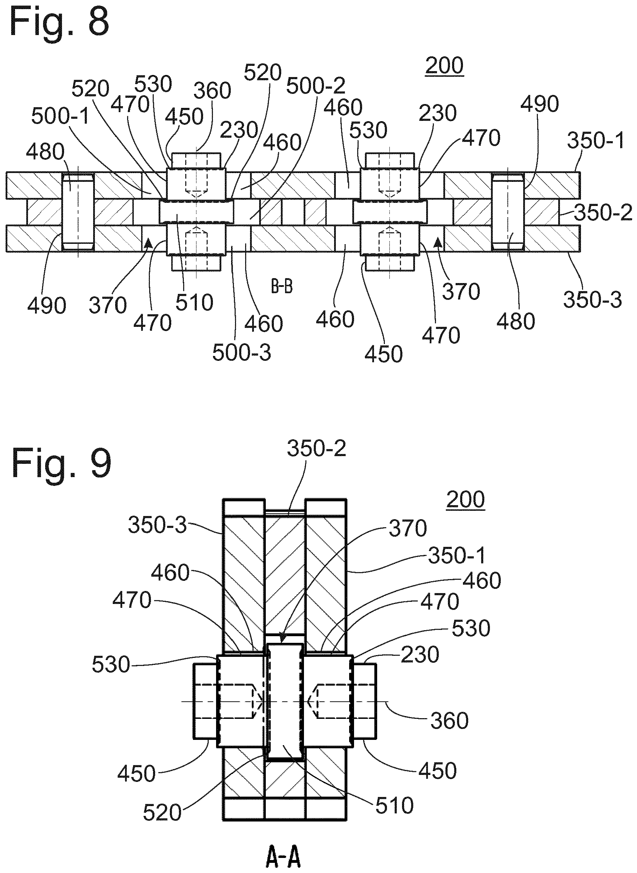

Wie bereits im Zusammenhang mit den Fig. 8 und 9 erläutert wurde, ermöglicht es das Vorsehen der weiteren Bünde 520, die die Tilgermasse 200 durchdringende Ausnehmung 370 gerade so auszugestalten, sodass der Wälzkörper 230 die Tilgermasse 200 zwischen den beiden Führungsbauteilen 210, 220 führt und/oder im Inneren der Tilgermasse gegen ein Herausfallen gesichert ist. Anders ausgedrückt liegt der weitere Bund 520 zwischen der Ebene 540 und der weiteren Laufbahn 470.

Durch den Einsatz einer Dämpferanordnung 100 oder auch eines Tilgerschwingungsdämpfers 110 gemäß einem Ausführungsbeispiel, der einen solchen Wälzkörper 230 einsetzt, bei dem der Durchmesser ausgehend von dem Wert an der Ebene 540 zu einem kleineren Wert an seinen beiden Enden zu beiden Seiten entlang der Rotationsachse 360 zumindest nicht zunimmt, können so die Wälzkörper 230 mittels eines Kaltfließprozesses hergestellt werden. Bei diesem wird ein Ausgangsmaterial des Wälzkörpers 230 mittels Druck und eines entsprechend ausgeformten Werkzeugs in die Form des Wälzkörpers 230 gebracht. So ermöglicht die beschriebene Form eine Entformung eines so hergestellten Wälzkörpers 230 aus dem Werkzeug, ohne dass gegebenenfalls die Laufbahnen 450, 470 desselben nachbearbeitet werden müssen. So kann es gegebenenfalls möglich sein, durch den Einsatz eines Ausführungsbeispiels zumindest teilweise spanende Verfahren, also beispielsweise ein Drehen, bei der Herstellung der Wälzkörper 230 einzusparen. So kann es gegebenenfalls möglich sein, die Herstellung zu vereinfachen und/oder kostengünstiger durchzuführen.

Optional können bei einem Wälzkörper 230 entlang der Rotationsachse 360 ferner wenigstens eine axiale Ausnehmung 550 vorgesehen werden, die sich entlang der Rotationsachse 360 des Wälzkörpers 230 in diesen hinein erstreckt. Bei dem in Fig. 10 gezeigten Wälzkörper 230 erstrecken sich von beiden Enden des Wälzkörpers 230 entsprechende axiale Ausnehmungen 550-1, 550-2 hinein, die als Bohrungen ausgestaltet sind und so einen im Wesentlichen zylinderförmigen Abschnitt aufweisen, der sich entlang der Rotationsachse 360 erstreckt. Hierdurch kann es möglich sein, ein Trägheitsmoment durch eine Verringerung einer Masse der Wälzkörper 230 zu erzielen. Hierdurch kann es gegebenenfalls möglich sein, ein Ansprechverhalten des Tilgerschwingungsdämpfers 110 oder auch andere Eigenschaften des Tilgerschwingungsdämpfers 110 bzw. des Wälzkörpers 230 positiv zu beeinflussen. Natürlich können, so sie vorgesehen sind, bei anderen Ausführungsbeispielen die axialen Ausnehmungen 550 auch anders ausgestaltet sein.

Darüber hinaus weist der in Fig. 10 gezeigte Wälzkörper 230 im Bereich seiner insgesamt vier Bünde 520, 530 jeweils einen Freistich 560-1, ..., 560-4 auf. Hierdurch kann es möglich sein, die Führungsaufgaben der Bünde 520, 530 gegebenenfalls zu verbessern. So zeigt Fig. 11 einen als Bereich 570 gekennzeichneten Bereich des Bunds 530 vergrößert, während Fig. 12 eine entsprechende Darstellung eines Bereichs 580 des weiteren Bunds 520 zeigt. Ein Vergleich der Fig. 11 und 12 zeigt hierbei, dass diese mit unterschiedlichen Winkeln gegenüber ihrem jeweiligen Bund 530 bzw. 520 ausgeführt sind. Hierdurch kann gegebenenfalls eine Herstellung, jedoch auch ein Abrollverhalten bzw. Führungsverhalten des Wälzkörpers 230 beeinflusst werden.

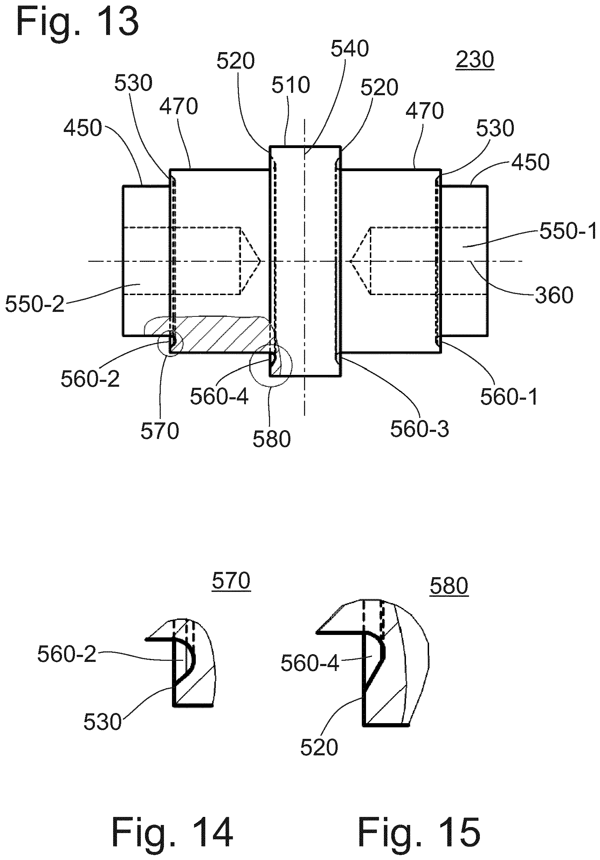

Die Fig. 13, 14 und 15 zeigen Darstellungen eines weiteren Wälzkörpers 230, wobei die Darstellungen der genannten Figuren denen der Fig. 10, 11 und 12 entsprechen. Der in den Fig. 13 bis 15 gezeigte Wälzkörper 230 unterscheidet sich von dem in Fig. 10 bis 12 gezeigten im Wesentlichen durch die Ausgestaltung der Winkel der Freistiche 560 zu den jeweiligen Bünden 520, 530. Während bei dem in den Fig. 10 bis 12 dargestellten Wälzkörper ungleich sind, weisen die Freistiche 560-2, 560-4 gegenüber ihren jeweiligen Bünden 530 bzw. 520, wie sie in den Fig. 14 und 15 dargestellt sind, identische Winkel auf. Im vorliegenden Fall betragen sie etwa 50°, während der Winkel des Freistichs 560-2 in Fig. 11 ebenfalls etwa 50° beträgt, der Winkel des Freistichs 560-4 aus Fig. 12 jedoch nur etwa 30° gegenüber dem entsprechenden Bund 530, 520. Selbstverständlich können diese Werte sowie ihre Verhältnisse zueinander bei anderen Ausführungsbeispielen abweichen.

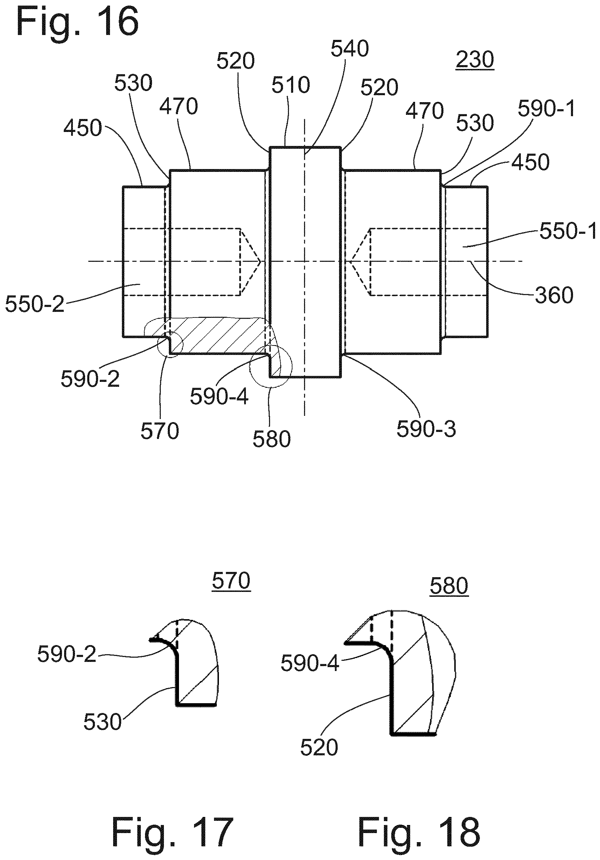

Fig. 16 zeigt eine weitere Ausgestaltung eines Wälzkörpers 230, die sich von der in Fig. 10 gezeigten Ausgestaltung dadurch unterscheidet, dass dieser Wälzkörper 230 zwischen den Bünden 530 und den angrenzenden Laufbahnen 450 jeweils einen konkav ausgeformten Übergangsbereich 590-1, 590-2 aufweist. Ebenso weist der Wälzkörper zwischen dem weiteren Bund 520 und den angrenzenden weiteren Laufbahnen 470 ebenfalls konvexe Übergangsbereiche 590-3, 590-4 auf.

Fig. 17 zeigt wiederum den vergrößerten Bereich 570, der den Übergangsbereich 590-2 zwischen dem Bund 530 und der Laufbahn 450 zeigt, während Fig. 18 den Bereich 580 vergrößert darstellt, der den Übergangsbereich 590-4 im Bereich des weiteren Bunds 520 zeigt. Die Übergangsbereiche 590 sind bei dem hier gezeigten Wälzkörper 230 im Wesentlichen identisch ausgeführt und weisen einen gemeinsamen Krümmungsradius auf, der je nach konkreter Implementierung im Bereich von weniger als 1 mm bis mehrere Millimeter reichen kann. Selbstverständlich können bei anderen Ausführungsbeispielen auch Wälzkörper 230 zum Einsatz kommen, bei denen die Übergangsbereiche 590 unterschiedlich, beispielsweise mittels unterschiedlicher Krümmungsradien ausgeführt sind. Ebenso können Wälzkörper 230 verwendet werden, bei denen sowohl Übergangsbereiche, beispielsweise im Bereich der Bünde 530 oder auch im Bereich der weiteren Bünde 520 sowie Freistiche 560 an den anderen Bünden 520, 530 vorgesehen sind.

Während bei konventionellen Tilgerschwingungsdämpfern das Fahrmoment über eine Nabenscheibe mit einer Anordnung der Tilgermassen beidseitig der Nabenscheibe übertragen wird, setzen Dämpferanordnungen 100, wie sie beispielsweise im Zusammenhang mit den Fig. 1 bis 18 beschrieben wurden, solche Tilgerschwingungsdämpfer 110 ein, bei denen die wenigstens eine Tilgermasse 200 zwischen einem ersten und einem zweiten Führungsbauteil 210, 220 geführt werden. Die Führung ist hierbei derart ausgebildet, dass die wenigstens eine Tilgermasse 200 in der Lage ist, durch eine entsprechende Schwingung einen Schwingungsanteil der eingeleiteten Drehbewegung zu dämpfen oder vollständig zu tilgen. Bei konventionellen Tilgerschwingungsdämpfern müssen häufig die Tilgermassen über Kunststoffgleiter reibungsbehaftet axial an der Nabenscheibe abgestützt werden. Die Wälzkörper, die auch als Rollen bezeichnet werden, weisen in einem solchen Fall häufig einen Zentrierbund auf, welcher nur durch Zerspanung herstellbar ist. Hierdurch liegt in einem solchen konventionellen System häufig eine hohe Reibung vor. Ebenso ist das Herstellungsverfahren häufig aufwendig.

Ausführungsbeispiele können so beispielsweise eine reibungsärmere bzw. reibungsfreiere Lagerung einer Tilgermasse, die auch als Fliehgewicht bezeichnet wird, ermöglichen, wodurch die Funktion des auch häufig einfach als Tilgers bezeichneten Tilgerschwingungsdämpfers 110 gegebenenfalls verbessert werden kann.

So werden Führungsbauteile, die aufgrund ihrer häufig als Blech ausgeführten Form auch als Bahnbleche bezeichnet werden, beidseitig der Tilgermassen 200 eingesetzt. Hierdurch kann ein Abstützmoment der Tilgermasse orthogonal zu der auch als Drehachse bezeichneten Rotationsachse 360 über die auch als Laufrolle bezeichneten Wälzkörper aufgenommen werden. Die Führungsbauteile sind hierbei über Verbindungsstrukturen 240 bzw. Abstandsstücke 250 miteinander verbunden. Wie bereits zuvor erläutert wurde, kann beispielsweise eines der Führungsbauteile, beispielsweise das erste Führungsbauteil 210, als Nabenscheibe ausgeführt werden, über welche das Fahrmoment vom Druckfedersatz, also der Federanordnung 150 der Zweimassenschwungradanordnung 120 bis auf die Sekundärseite übertragen wird. Hierbei liegt das zweite Führungsbauteil 220 häufig nicht bzw. häufig nur mittelbar, also beispielsweise nur räumlich beschränkt entlang seiner kürzeren Ausdehnung, im Fahrmomentenfluss. Das zweite Führungsbauteil 220 wird so häufig nicht im Bereich der Führungslaufbahn bzw. im Bereich der Führungslaufbahnen 440 durch ein entsprechendes Drehmoment belastet. Lediglich im Bereich der Verbindungsstrukturen 240 bzw. seiner Anbindung an das zweite Führungsbauteil 220 wird das entsprechende Fahrmoment über das zweite Führungsbauteil 220 übertragen.

Bei dem in den Fig. 1 bis 18 gezeigten Ausführungsbeispielen einer Dämpferanordnung 100 ist der Tilgerschwingungsdämpfer 110 in einem sogenannten Tilger-Trockenraum angeordnet, der von einem auch als Fettraum bezeichneten Volumen der Zweimassenschwungradanordnung 120 getrennt ist, um eine negative Beeinflussung der Tilgerfunktion durch eine reibungsbehaftete Fettadhäsion an diesem zu unterbinden. Anstelle des beschriebenen Fetts können auch andere Schmiermittel bzw. Schmierstoffe eingesetzt werden, die beispielsweise der Federanordnung 150 und ihren Federelementen 170 zur Reibungsreduzierung oder anderen Gründen zugeordnet sind.

Bei dem in den Fig. 1 bis 18 gezeigten Ausführungsbeispielen wird diese Trennung des Tilger-Trockenraums von dem Fettraum der Zweimassenschwungradanordnung 120 über das axial umgelenkte Deckblech 400 des Gehäuses 130 realisiert, welches zur Reibungsreduzierung und zur Vermeidung von Reibrostbildung beispielsweise mit Kunststoff ummantelt sein kann. Dieses kann sich optional auch an der Nabenscheibe 160, also dem ersten Führungsbauteil 210, abstützen. Um die Dichtwirkung gegen spritzendes Schmiermittel, also beispielsweise das Spritzfett, zu erhöhen, kann sich die Nabenscheibe 160 optional auch axial teilweise über den umgelegten Deckblechrand erstrecken, sodass eine Labyrinthdichtung mit einem entsprechenden Labyrinthdichtungseffekt realisiert wird. Alternativ oder ergänzend kann die Abdichtung, beispielsweise zu dem entsprechenden Kunststoffelement, auch in radialer Richtung erfolgen, wodurch eine axiale Vorspannung gegebenenfalls entfallen kann. Ebenso kann jedoch auch die Abdichtung über die beschriebene Spaltdichtung 390 gegebenenfalls auch im Falle einer axialen Abdichtung ohne eine axiale Vorspannung umgesetzt werden.

Hinsichtlich der auch als Laufrollen bezeichneten Wälzkörper 230 werden diese bei den beschriebenen Ausführungsbeispielen als gestufte Körper dargestellt, um über die Stufen, also die Bünde 520, 530, eine reibungsärmere Axiallagerung zwischen der Tilgermasse 200 und den Führungsbauteilen 210, 220 umzusetzen. Der axiale Führungseffekt der Wälzkörper 230 besteht darin, dass an einem äußeren größeren Bund, dem weiteren Bund 520, die Tilgermasse 200 axial zu dem Wälzkörper 230 geführt wird. Der kleinere Rollenbund, also der Bund 530 des Wälzkörpers 230, fixiert den Wälzkörper 230 zu den betreffenden Führungsbauteilen 210, 220, also beispielsweise zu der Nabenscheibe 160.

Die Wälzkörper 230 werden hierbei in der Tilgermasse vormontiert, welche dann mit Spann-, Passstiften 480 oder beispielsweise auch durch eine Vernietung zusammengebaut werden. Die Tilgermassen 200 umfassen in einem solchen Fall häufig wenigstens zwei Teile bzw. Einzeltilgermassen 350. Die Tilgermassen 200 können jedoch gegebenenfalls auch lediglich eine einzige Einzeltilgermasse 350 umfassen. Im Falle einer dreiteiligen Ausgestaltung der Tilgermassen 200 kann der mittig liegende, häufig ungehärtete Teil der Tilgermasse 200, also beispielsweise die Einzeltilgermasse 350-2 aus Fig. 4, zur Trägheitserhöhung und/oder Abstandsdefinition herangezogen werden.

Die beschriebene Ausgestaltung der Wälzkörper 230 als Körper aus einem härtbaren Werkstoff, beispielsweise einem Stahl, dessen Stufen bzw. Bünde 520, 530 zu seinen Enden hin abfallen, ist beispielsweise dazu geeignet, die Wälzkörper 230 mithilfe eines spanlosen Prozesses, beispielsweise im Kaltfließprozess, herzustellen, da dabei die Laufflächen bzw. Laufbahnen 450, 470 und gegebenenfalls 510 keine Formteilungsmarkierungen aufweisen. Eine Nachbearbeitung kann so gegebenenfalls eingespart werden. Bei konventionellen Rollen, welche beispielsweise durch ein Drehen hergestellt werden, ergibt sich so eine nicht unerhebliche Vereinfachung der Herstellung und damit gegebenenfalls ein nennenswerter Kostenvorteil. Die Wälzkörper 230 können optional aus Montage- und/oder Funktionsgründen, beispielsweise zur Anpassung oder Reduzierung einer Massenträgheit, eine Mittenbohrung in Form eines Sack- oder Durchgangslochs oder auch eine anders ausgestaltete axiale Ausnehmung 550 aufweisen.

Im Falle einer Anwendung eines solchen gestuften Wälzkörpers 230 kann dieser vor dem Aufstecken und Verstiften, Vernieten oder anderweitigem Verbinden der beiden außen liegenden und die Führungslaufbahnen 460 tragenden gehärteten Einzeltilgermassen 350 (Fliehgewichtplatten) diese in die innere, im Allgemeinen nicht gehärtete ("weiche") Platte bzw. Einzeltilgermasse 350 eingelegt werden. Im Falle eines so zusammengesetzten bzw. gebauten Fliehgewichts kann durch den weiteren Bund 520 an dem größeren Durchmesser der Wälzkörper 230 gegen ein axiales Herausfallen aus der Tilgermasse 200 gesichert werden. Im verbauten Zustand der Tilgermasse 200 in dem Tilgerschwingungsdämpfer 110 kann dieser weitere Bund 520 auch die axiale Führung der Tilgermasse 200 übernehmen.

Der an dem kleineren Durchmesser vorgesehene Bund 530, welcher beispielsweise symmetrisch rechts und links zu der Ebene 540 angeordnet sein kann, übernimmt wiederum die axiale Führung der gesamten zusammengebauten Tilgermasse 200 gegenüber den beiden Führungsbauteilen 210, 220 bzw. der Nabenscheibe 160.

Neben der konstruktiven Ausführung als gebaute Tilgermassen 200, wie diese zuvor beschrieben wurde, bei denen die Einzeltilgermassen 350 axial miteinander verbunden, beispielsweise vernietet oder verstiftet sind, besteht die Möglichkeit, die Einzeltilgermassen 350 auch einzeln zu verbauen und diese über wenigstens einen gemeinsamen Wälzkörper 230 zu führen. Es werden häufig so wenigstens zwei Einzeltilgermassen 350 (Fliehgewichte) im Rahmen einer Tilgermasse 200 vorgesehen, auch wenn grundsätzlich einzelne Tilgermassen 350 ebenso als Tilgermassen 200 verwendet werden können.

Im Fall der Verwendung von Einzeltilgermassen 350, die auf einem blechartigen Werkstück beruhen, kann beispielsweise eine stanzbare Materialdicke eine Dicke der Einzeltilgermassen 350 und deren Anzahl im Falle eines beschichteten Aufbaus der Tilgermasse 200 bestimmen, je nachdem, welche Masse die Tilgermasse 200 im späteren Einsatz haben soll.

In einem solchen Fall können die Wälzkörper 230 gegebenenfalls auch keine axiale Fixierung der einzelnen Einzeltilgermassen 350 übernehmen. Die Wälzkörper 230 können so beispielsweise nur über den oder die Bünde 530 über die Nabenscheibe 160 bzw. die entsprechenden Führungsbauteile 210, 220 begrenzt und geführt werden. Als axialer Anlaufschutz der Tilgermassen 200 zu der Nabenscheibe 160 und/oder den Führungsbauteilen 210, 220 können sich die berührenden Flächen der Tilgermassen 200, der Nabenscheibe 160 und/oder der beteiligten Führungsbauteile 210, 220 beschichtet sein oder Kunststoffgleitflächen aufweisen.

Diese Gestaltung der Tilgermassen 200 kann grundsätzlich nicht nur im Zusammenhang mit einer Zweimassenschwungradanordnung 120 verwendet werden, sondern können auch im Rahmen anderer Dämpferanordnungen 100 oder auch als einzelne Tilgerschwingungsdämpfer 110 verwendet werden, die beispielsweise im Bereich von Wandlersystemen, Nasskupplungen oder Torsionsdämpfern für Hybrid- bzw. Doppelkupplungssysteme verwendet werden. Ebenso können gegebenenfalls entsprechende Tilgerschwingungsdämpfer 110 auch als Phasenschieber im Falle einer Leistungsverzweigungsanordnung verwendet werden. Neben einer Zweimassenschwungradanordnung 120 mit einem entsprechenden drehzahladaptiven Tilgerschwingungsdämpfer 110 können Dämpferanordnungen 100, Tilgerschwingungsdämpfer 110 und andere Ausführungsbeispiele auch zur Drehmomentführung bei anderen Anwendungen als drehzahladaptiven Tilgern für Zweimassenschwungradanordnungen 120 eingesetzt werden.

Den im Zusammenhang mit den Fig. 1 bis 18 dargestellten Ausführungsbeispielen liegt so beispielsweise der Kerngedanke unter anderem zugrunde, dass das Drehmoment übertragende Bauteil, also die Nabenscheibe 160, die - in der hier gezeigten Darstellung - linksseitige Begrenzung des Tilgerkörperbauraums darstellt. Diese weist als erstes Führungsbauteil 210 die Führungslaufbahnen 440 auf, die beispielsweise nierenförmig ausgestaltet sind. Die Nabenscheibe 160 weist so tilgerbahnbeschreibende bzw. tilgermassenbahnbeschreibende Ausnehmungen auf und ist mittels der Abstandsstücke 250 oder anderer Verbindungsstrukturen 240 in den Drehmomentübertragungsweg eingebunden. Die Verbindungsstrukturen 240 bzw. Abstandsstücke 250 übertragen hierbei das gesamte Fahrdrehmoment auf das Sekundärschwungrad bzw. auf die Abtriebsseite. Das in den Figuren rechte Bahnblech, also das zweite Führungsbauteil 220, ist ebenfalls mit nierenförmigen Ausnehmungen ausgebildet, die die Führungslaufbahn 440 des zweiten Führungsbauteils 220 bildet. Das zweite Führungsbauteil 220 bildet dabei die rechtsseitige Begrenzung und wird mit den Abstandsstücken 250 oder den Verbindungsstrukturen 240 axial zum Sekundärschwungrad geklemmt bzw. vernietet. Das zweite Führungsbauteil 220 nimmt hier im Wesentlichen kein Fahrmoment auf, sondern dient lediglich der Aufnahme des Tilgerreaktionsmoments.

Die Nabenscheibe 160 nimmt dagegen sowohl das Fahrmoment wie auch das Tilgermoment auf. Es kann daher sinnvoll sein, zumindest über wenigstens drei, häufig über wenigstens vier oder mehr entsprechende Abstandsstücke 250 oder Verbindungsstrukturen 240 das nabenscheibenseitige Drehmoment axial durch den Tilgerkörperbauraum zu übertragen.

Alternativ zu Abstandsstücken 250 kann die Nabenscheibe 160 bzw. das erste Führungsbauteil 210 örtlich, beispielsweise an drei, vier oder weiteren Stellen, tiefziehtechnisch auf das zweite Führungsbauteil 220, also beispielsweise in den Figuren nach rechts bis zu dem zweiten Bahnblech, gezogen werden. Diese können dann beispielsweise mittels Standardnietverbindungen mit den sekundärseitigen Bauteilen verbunden werden. Die Nietverbindungen können so beispielsweise zwischen der Nabenscheibe 160 und dem zweiten Führungsbauteil 220, gegebenenfalls unter Einbeziehung des sekundärseitigen Schwungrads der Zweimassenschwungradanordnung 120 erfolgen.

Eine weitere Verbindungsalternative der Nabenscheibe 160 kann beispielsweise dadurch erzielt werden, indem die Nabenscheibe 160 an einem Innendurchmesser per Schweißverbindung direkt mit der profiltragenden Abtriebsnabe verbunden wird. Hierzu ist die in der Regel einsatzgehärtete Nabenscheibe 160 gegebenenfalls im Schweißbereich von der Einsatzhärtschicht zu befreien, was beispielsweise durch ein Drehen oder auch durch ein Verhindern des Aufkohlens geschehen kann. Hierdurch kann es gegebenenfalls möglich sein, die Tilgerkörpermasse weiter zu steigern, da die zur Übertragung des Fahrdrehmoments herangezogenen Abstandsstücke 250 bzw. Verbindungsstrukturen 240 eingespart werden können.

Weiterhin kann die Möglichkeit bestehen, ohne Beteiligung von Abstandsstücken 250 den Nabenscheibeninnendurchmesser so weit nach radial innen zu führen, dass die Nabenscheibe 160 direkt mit der Abtriebsnabe vernietet werden kann. Statt mit der Abtriebsnabe kann diese Art der Vernietung auch mit einem Standardsekundärschwungrad gegebenenfalls erfolgen.

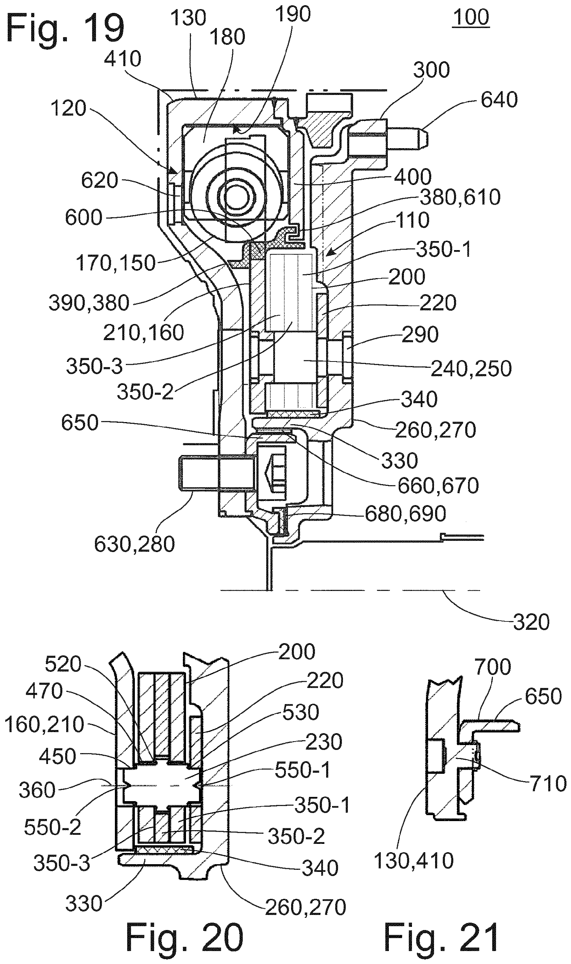

Fig. 19 zeigt eine Querschnittsdarstellung durch eine weitere Dämpferanordnung 100, die einen Tilgerschwingungsdämpfer 110 und eine Zweimassenschwungradanordnung 120 umfasst, die jedoch im Vergleich zu den im Zusammenhang mit den Fig. 1 bis 18 beschriebenen Ausführungsbeispielen nicht vollständig radial überdeckend ausgeführt sind. Bei der hier gezeigten Variante ist die Federanordnung 150 bzw. ihre Federelemente 170 axial leicht gegenüber den Tilgermassen 200 des Tilgerschwingungsdämpfers 110 versetzt angeordnet. Unabhängig hiervon ist jedoch auch bei diesem Ausführungsbeispiel die Federanordnung 150 der Zweimassenschwungradanordnung 120 radial außerhalb der Tilgermassen 200 des Tilgerschwingungsdämpfers 110 angeordnet.

Darüber hinaus unterscheidet sich die Dämpferanordnung 100 aus Fig. 19 von den zuvor beschriebenen dadurch, dass die Dichtung der Zweimassenschwungradanordnung 120 gegenüber dem Tilgerschwingungsdämpfer 110 unterschiedlich ausgeführt ist. So weist die Dämpferanordnung 100 eine Dichtungsstruktur 380 auf, die einen Dichtungsring 600 aufweist, bei dem es sich beispielsweise um einen Kunststoffring handeln kann. Der Dichtungsring 600 ist hierbei mit dem ersten Führungsbauteil 210 derart verbunden, sodass der Dichtungsring 600 durch eine Drehung des ersten Führungsbauteils 210, also der Nabenscheibe 160, ebenfalls mitgenommen wird. Auch hier umgibt das Gehäuse 130 die Zweimassenschwungradanordnung 120 wenigstens teilweise, wobei der Dichtungsring 600 im vorliegenden Ausführungsbeispiel sowohl eine Spaltdichtung 390 bezüglich des Gehäuses 130 wie auch eine Labyrinthdichtung 610 bezüglich des Gehäuses 130 der Zweimassenschwungradanordnung 120 bildet. Die Spaltdichtung 390 bildet der Dichtungsring 600 hierbei unmittelbar gegenüber der Gehäuseschale 410. Die Labyrinthdichtung 610 bildet der Dichtungsring 600 hierbei gegenüber dem Abdeckblech 400, welches zusammen mit der Gehäuseschale 410 das Gehäuse 130 der Zweimassenschwungradanordnung 120 bildet.

Eine Spaltdichtung basiert hierbei darauf, dass diese zwischen den beteiligten Komponenten, also im vorliegenden Fall zwischen dem Dichtungsring 600 und dem Gehäuse 130, einen so kleinen Spalt ausbildet, sodass ein Vordringen des zurückzuhaltenden Stoffs, beispielsweise des Schmiermittels im vorliegenden Ausführungsbeispiel, zumindest erheblich reduziert, wenn nicht sogar vollständig unterbunden werden kann. Eine Labyrinthdichtung weist im Unterschied zu einer Spaltdichtung mehrere entsprechende Spalte auf, die beispielsweise parallel zueinander ausgerichtet, jedoch hintereinander im Sinne einer fluidtechnischen Flussrichtung angeordnet sind. Die entsprechenden parallelen Spaltdichtungen können hierbei beispielsweise durch senkrecht zu den parallelen Ausrichtung verlaufenden Verbindungsspalten oder Abschnitte verbunden sein. Eine Labyrinthdichtung umfasst so typischerweise eine Mehrzahl von Spaltdichtungen, die optional parallel ausgerichtet, jedoch immer in Serie geschaltet sind.

Bei dem in Fig. 19 gezeigten Ausführungsbeispiel einer Dämpferanordnung 100 ist der Dichtungsring als Kunststoffring ausgebildet, der um die Nabenscheibe 160, also das erste Führungsbauteil 210, umspritzt wurde. Bei anderen Ausführungsbeispielen kann jedoch gegebenenfalls auch eine schwimmende Lagerung vorgesehen werden, bei der der Dichtungsring 600 gegebenenfalls nur mit dem betreffenden Bauteil, also der Nabenscheibe 160 oder dem ersten Führungsbauteil 210, über eine Verzahnung verbunden ist, die durchaus in Umfangsrichtung, axialer Richtung - entlang der Drehachse 320 - und radialer Richtung Spiel aufweisen darf. Entsprechende Ausführungsbeispiele werden im Zusammenhang mit den nachfolgenden Figuren noch näher beschrieben und erläutert.

Um nun eine Befüllung des Fettraums der Dämpferanordnung 100 bzw. seiner Zweimassenschwungradanordnung 120 zu ermöglichen, weist die Dämpferanordnung 100 in der Gehäuseschale 410 des Gehäuses 130 eine Schmiermitteleinfüllöffnung 620 auf, die beispielsweise nach einem Befüllen der Dämpferanordnung 100 mit dem Schmiermittel durch einen entsprechenden Verschluss, beispielsweise einen Stopfen, fluiddicht verschlossen werden kann.

Zur Fixierung bzw. Verbindung der Dämpferanordnung 100 an das Antriebsaggregat weist die hier gezeigte Dämpferanordnung 100 eine Anbindungsstruktur 280 in Form einer Kurbelwellenschraube 630 auf. Darüber hinaus weist die Dämpferanordnung 100 zur abtriebsseitigen Verbindung derselben einen Zapfen 640 auf, über den die sekundäre Schwungmasse 300 mit einem nachfolgenden Bauteil, beispielsweise einer Kupplung, mechanisch drehfest verbindbar ist.

Die Dämpferanordnung 100 weist hierbei neben dem Aufnahmeabschnitt 330, der mit dem zweiten Führungsbauteil 220 des Tilgerschwingungsdämpfers 110 drehfest über die Nietverbindung 290 verbunden ist und sich im Wesentlichen entlang der Drehachse 320 erstreckt, ebenso einen axialen Abschnitt 650 auf, der mit der Eingangsseite, also im vorliegenden Fall mit dem Gehäuse 130 der Dämpferanordnung 100 drehfest gekoppelt ist. Auch dieser erstreckt sich im Wesentlichen entlang der Drehachse 320 der Drehbewegung. Zwischen dem axialen Abschnitt 650 und dem Aufnahmeabschnitt 330 ist im vorliegenden Ausführungsbeispiel ein Lager 660 angeordnet, das gerade so ausgebildet ist, sodass es den axialen Abschnitt 650 und den Aufnahmeabschnitt 330 bezogen auf die Drehachse 320 radial führt. Genauer gesagt handelt es sich bei dem Lager 660 um ein Radiallager, welches gerade so ausgebildet ist, dass dieses die beiden zuvor genannten Abschnitte 330, 650 im Wesentlichen ausschließlich radial führt. Das Lager 660 bzw. Radiallager 670 kann hierbei beispielsweise als Gleitlager, jedoch auch als Nadellager ausgestaltet werden. Ebenso können andere, radial schmal bauende Lagertypen zum Einsatz kommen.

Um darüber hinaus auch eine axiale Führung von Eingangsseite zu Ausgangsseite, also von Gehäuse 130 zu dem abtriebsseitigen Bauteil 260 bzw. der Abtriebsnabe 270 zu erzielen, weist die Dämpferanordnung 100 ferner ein weiteres Lager 680 auf, bei dem es sich genauer gesagt um ein Axiallager handelt, das ebenso wiederum als Gleit- oder Wälzlager ausgeführt werden kann, wie dies auch für das Lager 660 gilt.

Durch die Ausführung des Lagers 660 und die Trennung von der axialen Führung durch das Vorsehen des weiteren Lagers 680 kann so die Kurbelwellenschraube 630 zwischen diesen angeordnet werden. Aufgrund der geringeren axialen Erstreckung des Lagers 660 sowie der betreffenden Abschnitte 330 und 650 kann so ein Abstand zwischen der Anbindungsstruktur 280 und der Kurbelwellenschraube 630 und der Tilgermasse 200 reduziert werden. Hierdurch kann es möglich sein, einen Kompromiss zwischen dem zur Verfügung stehenden Bauraum und Masse der Tilgermasse 200 zu verbessern.

Das Lager 660 liegt hierbei bezogen auf die Tilgermasse 200 des Tilgerschwingungsdämpfers 110 radial innen und weist entlang der Drehrichtung 320 einen Überlapp von wenigstens 40 % bezogen auf eine axiale Erstreckung der Tilgermasse 200 des Tilgerschwingungsdämpfers 110 auf.

Durch die funktionale Trennung des im Wesentlichen radial führenden Lagers 660 und des im Wesentlichen axial führenden Lagers 680 kann so ohne eine signifikante Vergrößerung des radialen Bauraums das Lager 660 entlang der Drehachse 320 verlängert werden. Hierdurch kann es möglich sein, eine Flächenpressung wenigstens eines der Lager 660, 680 zu reduzieren, beispielsweise gegebenenfalls zu halbieren. Es kann so gegebenenfalls eine Belastung dieses Lagers reduziert werden, sodass gegebenenfalls im Vergleich zu einem entlang der Drehachse 320 kürzeren Lager 660 eine effizientere Auslegung möglich ist.

Darüber hinaus trägt der Aufnahmeabschnitt 330 wiederum den Stützring 340, der den Aufnahmeabschnitt 330 wiederum radial umschließt und so ausgebildet ist, dass er bei einem Stillstand der Dämpferanordnung 100 mit der Tilgermasse 200 in Kontakt treten kann und hierbei ein entstehendes Geräusch dämpfen kann. Je nach konkreter Ausgestaltung der Dämpferanordnung 100 kann es hierbei ratsam sein, den Stützring 340 entlang der Drehachse 320 derart auszubilden, dass dieser wenigstens 50 % einer Erstreckung der Tilgermasse 200 entlang der Drehachse 320 entspricht. Es kann hierbei ferner ratsam sein, das vorgenannte Verhältnis weiter zu steigern, sodass beispielsweise wenigstens 60 %, wenigstens 80 %, wenigstens 90 % oder sogar wenigstens 100 % der betreffenden Erstreckung der Tilgermasse 200 von dem Stützring 340 entlang der Drehachse 320 (axiale Richtung) überdeckt werden. Hierdurch können Aufschlagsgeräusche gegebenenfalls effizienter und über einen längeren Zeitraum, also über eine längere Lebensdauer der betreffenden Dämpferanordnung 100 reduziert oder vollständig unterbunden werden.

So kann diese Anordnung von Aufnahmeabschnitt 330 und axialem Abschnitt 650 zusammen mit dem Lager 660 und optional im Stützring 340 gegebenenfalls eine radial kompaktere Bauform der Dämpferanordnung 100 ermöglichen. So kann beispielsweise ein radialer Abstand des Lagers 660 von der Drehachse 320 wenigstens 80 % eines radialen Abstands der Tilgermasse 200 des Tilgerschwingungsdämpfers 110 von der Drehachse 320 aufweisen.

Fig. 20 zeigt eine vergrößerte Querschnittsdarstellung der Dämpferanordnung 100 im Bereich der in Fig. 1 aufgrund der dort gewählten Ebenen nicht gezeigten Wälzkörper 230. Die Ausgestaltung der Wälzkörper 230 entspricht hierbei im Wesentlichen der in den Fig. 10 bis 18 gezeigten, wobei im Unterschied zu den dortigen Wälzkörpern 230 die axialen Ausnehmungen 550-1, 550-2, bei denen es sich um optionale Strukturen handelt, deutlich kleiner ausgeführt sind. Während sie bei den in den Fig. 10 bis 18 gezeigten Wälzkörpern 230 als getrennte Sacklöcher ausgeführt sind, sind sie hier lediglich als Vertiefungen dargestellt.

Der Stützring 340 kann hierbei mit dem axialen Abschnitt 650 beispielsweise stoffschlüssig, kraftschlüssig und/oder auch formschlüssig verbunden sein, kann jedoch auch zu diesem schwimmend aufgenommen sein. Der Stützring 340 ist hierbei typischerweise aus einem Material gefertigt, welches schallschluckende bzw. schalldämmende Eigenschaften hat, sodass ein Aufschlagsgeräusch der Tilgermassen 200 reduziert oder sogar unterbunden wird. So kann der Stützring beispielsweise einen Kunststoff, einen Gummi oder ein anderes Polymer umfassen. Darüber hinaus kann der Stützring 340 beispielsweise zur Anpassung eines Einfederungsverhaltens bei Berührung mit der Tilgermasse 200 in Umfangsrichtung und/oder in axialer Richtung eine polygonale Kontur und/oder eine konvexe oder konkave Kontur aufweisen.

Fig. 21 zeigt eine vergrößerte Darstellung einer Anbindung des axialen Abschnitts 650 bzw. des diesen umfassenden Haltebauteils 700. Dieses ist an dem Gehäuse 130, genauer gesagt im vorliegenden Fall an der Gehäuseschale 410, über eine Ausstellung 710 an diesem befestigt. Die Ausstellung 710 kann hierbei beispielsweise durch einen Kaltfließprozess oder ein anderes Umformen, beispielsweise ein Tiefziehen, erstellt werden.

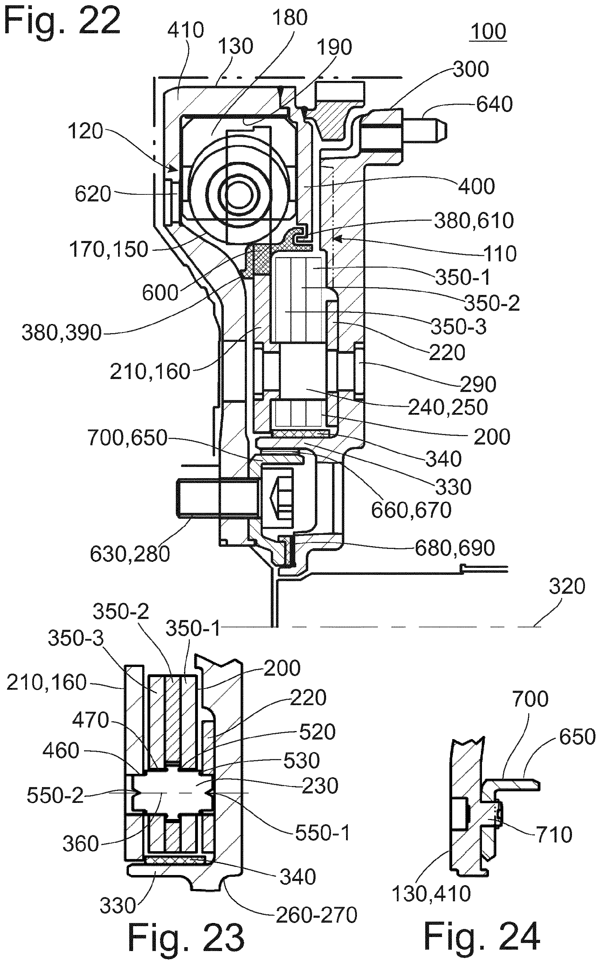

Fig. 22 zeigt eine Fig. 19 vergleichbare Darstellung einer weiteren Dämpferanordnung 100 mit einem Tilgerschwingungsdämpfer 110 und einer Zweimassenschwungradanordnung 120. Bei der in Fig. 22 gezeigten Dämpferanordnung ist jedoch im Unterschied zu der in Fig. 19 gezeigten der Dichtungsring 600 schwimmend bezüglich der Nabenscheibe 160 bzw. dem ersten Führungsbauteil 210 angebracht. Hierdurch kann der Dichtungsring entlang der axialen Richtung, also entlang der Drehachse 320, eine Bewegung ausführen, und so gegebenenfalls im Laufe seines Lebens auftretender Schwankungen kompensieren. Der Drehachse 600 bildet jedoch auch hier bezüglich der Gehäuseschale 410 bzw. des Gehäuses 130 eine Dichtungsstruktur 380 auf, die eine Spaltdichtung 390 umfasst. Ebenso bildet er bezüglich des Gehäuses 130 bzw. des Abdeckblechs 400 eine entsprechende Dichtungsstruktur 380, welche eine Labyrinthdichtung 610 umfasst. Aufgrund der schwimmenden Lagerung des Dichtungsrings 600 kann es jedoch gegebenenfalls dazu kommen, dass dieser mit dem Gehäuse 130, also dem Abdeckblech 400 und/oder der Gehäuseschale 410 während des Betriebs in Kontakt gerät.

Die Fig. 23 und 24 zeigen wiederum entsprechende Vergrößerungen des Tilgerschwingungsdämpfers 110 im Bereich der Wälzkörper 230 bzw. eine Vergrößerung der Anbindung des Haltebauteils 700.

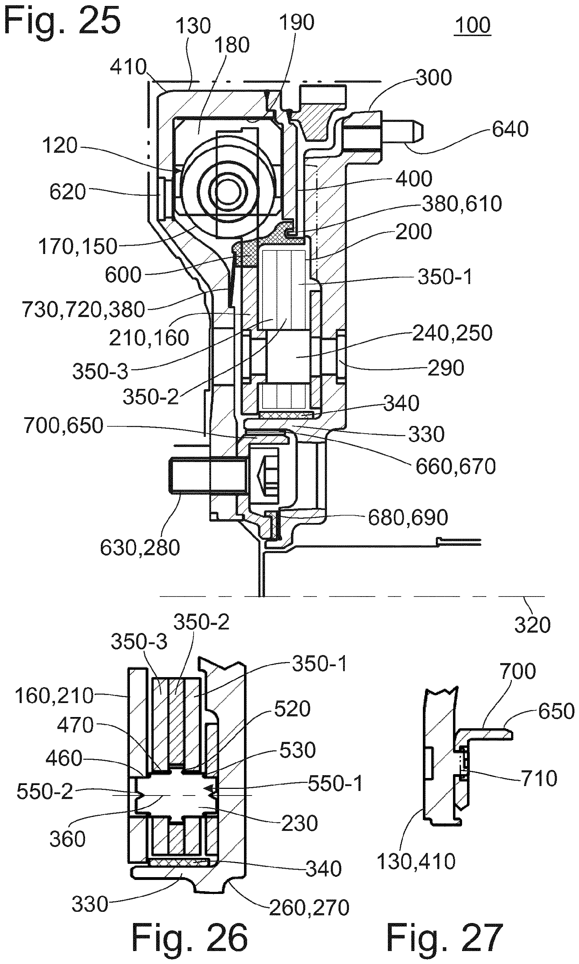

Fig. 25 zeigt eine weitere, Fig. 19 und Fig. 22 entsprechende Querschnittsdarstellung durch die Dämpferanordnung 100. Die hier gezeigte Dämpferanordnung 100 unterscheidet sich von denen der beiden zuvor genannten im Wesentlichen durch die Ausgestaltung des Dichtungsrings 600. So weist die Dichtungsstruktur 380 im vorliegenden Fall zwar wiederum bezüglich des Abdeckblechs 400 eine Labyrinthdichtungsstruktur 610 auf, umfasst jedoch an der der Gehäuseschale 410 zugewandten Seite ein Dichtungsfederelement 720, welches im vorliegenden Ausführungsbeispiel als Tellerfeder 730 ausgebildet ist. Bei anderen Ausführungsbeispielen kann das Dichtungsfederelement 720 beispielsweise auch als Membranfeder, Elastomerfeder oder Blattfeder ausgestaltet sein. Entsprechend wird durch das Dichtungsfederelement 720 der Dichtungsring 600 axial federnd beaufschlagt, wobei das Dichtungsfederelement 720 bei dem hier gezeigten Ausführungsbeispiel primärseitig mit dem Gehäuse 130 bzw. der Gehäuseschale 410 in Anschlag steht. Hierdurch kann es gegebenenfalls möglich sein, eine Dichtwirkung der Dichtungsstruktur 380 zu verbessern, indem durch das Dichtungsfederelement 720 eine gegebenenfalls durch einen Verschleiß auftretende nachlassende Dichtwirkung durch ein Nachführen des Dichtungsrings 600 kompensierbar sein kann.

Die Fig. 26 und 27 zeigen wiederum für das hier gezeigte Ausführungsbeispiel eine vergrößerte Darstellung im Bereich der Wälzkörper 230 sowie eine Anbindung des Haltebauteils 700 an das Gehäuse 130 bzw. die Gehäuseschale 410.

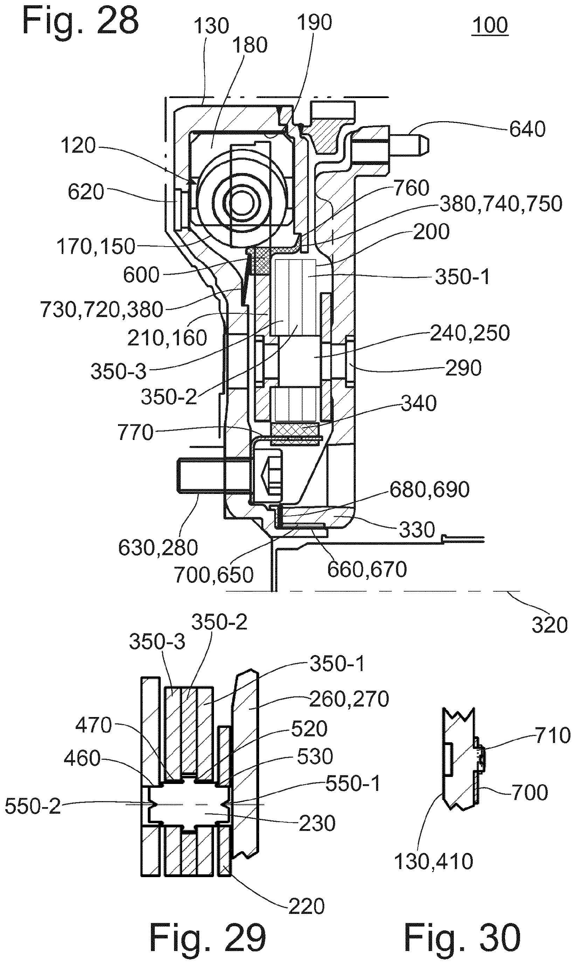

Fig. 28 zeigt eine Querschnittsdarstellung durch eine weitere Dämpferanordnung 100, die der Darstellung der Fig. 19, 22 und 25 entspricht. Auch hier weist die Dichtungsstruktur 380 wiederum einen Dichtungsring 600 auf, der über ein Dichtungsfederelement 720, welches wiederum als Tellerfeder 730 ausgeführt ist, mit der Gehäuseschale 410, also dem Gehäuse 130 in Anlage steht. Auch hier ist wiederum der Dichtungsring 600 axial verschiebbar, also verschiebbar entlang der Drehachse 320 mit dem ersten Führungsbauteil 210 bzw. der Nabenscheibe 160 verbunden.

Im Unterschied zu den zuvor geschilderten Dämpferanordnungen 100, welche den Dichtungsring 600 umfasst haben, erfolgt bei der hier gezeigten Dämpferanordnung 100 die Dichtung bezüglich des Abdeckblechs 400 des Gehäuses 130 nicht durch eine Spalt- oder Labyrinthdichtung, sondern über eine berührende Dichtung 740, welche eine Dichtlippe 750 umfasst. Die Dichtlippe 750 steht hierbei mit einer Nut 760 des Abdeckblechs 400 in Kontakt. Die Nut 760 dient hierbei zur Verbesserung der Dichtwirkung und zur radialen Führung der Dichtlippe 750.

Darüber hinaus unterscheidet sich die in Fig. 28 dargestellte Dämpferanordnung 100 ferner dadurch, dass das Lager 660, welches wiederum als Radiallager 670 ausgeführt ist und das weitere Lager 680, welches als Axiallager 690 ausgeführt ist, diesmal beide radial innen liegend bezogen auf die Anbindungsstruktur 280 in Form der Kurbelwellenschraube 630 angeordnet sind. Entsprechend ist bei diesem Ausführungsbeispiel auch der axiale Abschnitt 650 radial innen liegend bezogen auf die Anbindungsstruktur 280 angeordnet.

Um dennoch den Stützring 340 implementieren zu können, weist die Dämpferanordnung 100 eine Halterung 770 auf, welche den Stützring 340 aufnimmt. Die Halterung 770 kann hierbei beispielsweise aus einem blechartigen Werkstück durch ein Umformen und durch ein Umspritzen mit der Stützringstruktur geformt werden. Die Halterung 770 kann beispielsweise eine Bohrung aufweisen, durch die die Kurbelwellenschraube 630 führbar ist, sodass die Halterung 770 über die Kurbelwellenschraube 630 in dem Gehäuse 130 fixierbar ist.

Die Halterung 770 sowie der Stützring 340 können hierbei ringförmig, jedoch auch segmentartig, also nicht umlaufend, ausgeführt sein. Hinsichtlich seiner Eigenschaften und Materialzusammensetzung kann der Stützring 340 jedoch identisch zu den zuvor beschriebenen ausgeführt sein.

Die Fig. 29 und 30 zeigen entsprechend Darstellungen des Tilgerschwingungsdämpfers 110 im Bereich des Wälzkörpers 230 und im Bereich der Ausstellung 710, mit dem das Haltebauteil 700 an dem Gehäuse 130 bzw. der Gehäuseschale 410 befestigt ist.

Bei den hier gezeigten Dämpferanordnungen 100 der Fig. 19 bis 30 umfasst die Dichtungsstruktur 380 somit einen Dichtungsring 600, beispielsweise einen Kunststoffring. Dieser ist mit wenigstens einem der beiden Führungsbauteile 210, 220 derart verbunden, sodass der Dichtungsring 600 durch eine Drehung des Führungsbauteils 210, 220 mitgenommen wird. Die Dichtungsstruktur 380 umfasst hierbei ein Dichtungsfederelement 720, beispielsweise eine Tellerfeder 730, wobei das Dichtungsfederelement den Dichtungsring 600 gegen das Gehäuse der Zweimassenschwungradanordnung 120 zu drücken vermag.

Im Hinblick auf die Dichtungsstruktur 380 ist so bei den in den Fig. 19 bis 30 gezeigten Ausführungsbeispielen radial außerhalb der Tilgermassen 200 ein Kunststoffring als Dichtungsring 600 gezeigt. Dieser trennt den Nassraum, der die Federanordnung 150 und die gegebenenfalls als Druckfedern implementierten Federelemente 170 mit ihrer Fettfüllung umfasst, von dem Trockenraum, der den Tilgerkörper bzw. die Tilgermasse 200 umfasst. Der Dichtungsring 600 ist bei dem in Fig. 19 gezeigten Ausführungsbeispiel mit der Nabenscheibe 160 umspritzt, kann jedoch auch nur eingelegt sein, wie dies beispielsweise im Zusammenhang mit Fig. 22 beschrieben wurde. In einem solchen Fall kann sich der Dichtungsring 600 damit axial bewegen.

Der Dichtungsring 600 erstreckt sich hierbei jeweils in Richtung des Primärschwungrads und in Richtung des Deckblechs 400. Der Dichtungsring bildet damit zu beiden Bauteilen bei dem in Fig. 19 gezeigten Ausführungsbeispiel eine Spaltdichtung 390 bzw. eine Labyrinthdichtung 610 aus. Die Dichtspaltwirkung wird - wie beschrieben - gegebenenfalls durch eine einseitige oder beidseitige Labyrinth-Ausführung weiter erhöht. Hierdurch kann es möglich sein, die axiale Luft, die wegen des notwendigen Toleranzausgleichs typischerweise vorgesehen werden sollte, begrenzt werden, sodass diese nicht notwendigerweise zu einer Undichtheit führt, wenn Fett nach radial innen spritzt. Der Dichtungsring 600 umschließt radial die Tilgermasse 200 und ist örtlich mit der Nabenscheibe 160, also dem ersten Führungsbauteil 210, verzahnt. Er ist ferner in der umspritzten Ausführung axial in der Nabenscheibe fixiert. Im nur eingelegten Zustand erfolgt hierbei typischerweise keine Fixierung zu der Nabenscheibe 160. Er ist vielmehr axial schwimmend ausgelegt.

Der Dichtungsring 600 kann axial auch federnd beaufschlagt sein, wie dies beispielsweise in den Fig. 25 und 28 gezeigt ist. Hierfür kann linksseitig oder rechtsseitig ein Dichtungsfederelement 720, beispielsweise in Form einer Tellerfeder, vorzugsweise zwischen Primärblech und Dichtungsring angeordnet sein. Hierdurch kann der Dichtungsring an dem Deckblech 400 gegebenenfalls axial zur Anlage gebracht werden.

Die Fetteinfüllstelle, also die Schmiermitteleinfüllöffnung 620, die beispielsweise als Bohrung ausgeführt sein kann, befindet sich bei den Tilger-Zweimassenschwungrad-Ausführungen, wie diese hier gezeigt sind, meist radial außerhalb der Tilgermassen 200 und damit häufig auch radial außerhalb zumindest des zweiten Führungsbauteils 220. Sie befindet sich jedoch typischerweise radial innerhalb des Druckfederteilkreises, also innerhalb der Federanordnung 150. In dieser Zone befindet sich ein gewisser Leerraum, der sich auch zwischen die Federwindungen der Federelemente 170 erstrecken kann, in den dann ohne größeren Füllwiderstand das Schmiermittel, also beispielsweise das Zweimassenschwungrad-Fett nach der Endmontage der Zweimassenschwungradanordnung 120 und der Dämpferanordnung 100 eingefüllt werden kann. Hierdurch kann gegebenenfalls eine Taktzeit bei der Herstellung bzw. bei dem Bau einer solchen Dämpferanordnung 100 eingespart werden.

Bei dem in den Fig. 25 und 28 gezeigten Dämpferanordnungen 100 ist vorgesehen, dass der schwimmende Dichtungsring 600 durch das Dichtungsfederelement 720 axial beaufschlagt wird. Bei der in Fig. 25 gezeigten Ausführungsvariante wird der Dichtungsring 600 über das als Tellerfeder 730 implementierte Dichtungsfederelement 720 gegen die Nabenscheibe 160 gedrückt und geht auch an dieser axial auf Endanschlag. Die Spaltdichtung 390 zu dem Deckblech 400 bleibt somit erhalten. Reibung entsteht zumindest an dieser Stelle daher nicht. Es besteht vielmehr nur eine Reibstelle zwischen der primärseitigen Anbindung des Dichtungsfederelements 720 zu der Nabenscheibe 160. Eine niedrige Grundreibung ist damit prinzipbedingt einstellbar.

Bei der in Fig. 28 gezeigten Variante geht der Dichtungsring 600 nicht auf axialen Anschlag zur Nabenscheibe 160, sondern ist vielmehr bezüglich dieser schwimmend gelagert. Er wird durch das Dichtungsfederelement 720 axial gegen das Deckblech 400 gedrückt. Es entstehen dadurch zwei Reibstellen, einmal primärseitig zu der Nabenscheibe 160 und einmal zwischen Nabenscheibe 160 und dem Deckblech 400. Hierdurch kann ein höheres Grundreibmoment generierbar sein, das -je nach konkreter Implementierung - gegebenenfalls doppelt so hoch sein kann wie in dem zuvor gezeigten Fall in Fig. 25.

Im Hinblick auf den Stützring 340 kann dieser bei der in Fig. 28 gezeigten Variante der Dämpferanordnung 100 mit einem axial und geschlitzten Bereich der als Unterlegscheibe implementierten Halterung 770 per Spritzverfahren verbunden sein. Hierdurch kann es gegebenenfalls möglich sein, zusätzlich eine radiale Einfederung beim Aufschlagen der Tilgermassen 200 zu ermöglichen.

Das Sekundärschwungrad bzw. die sekundäre Schwungmasse 300 ist bei diesen gezeigten Ausführungsformen radial innerhalb der Tilgermassen 200 flanschartig in Richtung Motorseite verlängert. Hierbei überragt dieser Flansch axial die Kurbelwellenschraube 630 und auch das Axiallager 690. Er ist somit axial in der Erstreckung maximiert und bis auf eine minimale Luft an das Primärschwungrad bzw. das Gehäuse 130 herangeführt. Damit können gegebenenfalls die Voraussetzungen geschaffen werden, sodass das Zweimassenschwungrad-Radiallager 660 bzw. 670 als auch der Tilger-Stützring 340 in der axialen Breite verlängert bzw. maximiert werden kann. Der Stützring 340 ermöglicht hierbei die dämpfende Wirkung beim Aufschlag der Tilgermassen 200. Eine niedrige Flächenpressung bei dem Radiallager 670 und ein großes Materialdämpfvolumen können hierdurch gegebenenfalls implementiert werden. Gleichzeitig können gegebenenfalls beide Elemente in ihrer radialen Erstreckung sehr schmal ausgeführt sein. Dies gilt auch für den dazwischen liegenden Sekundärschwungradflansch, also den Aufnahmeabschnitt 330. Hierdurch kann es möglich sein, innerhalb der Zweimassenschwungradanordnung 120 die Tilgermassen 200 nach radial innen zu verlängern bzw. zu maximieren. Der Aufnahmeabschnitt 330 ist hierbei an seinem Außendurchmesser nicht zwingender maßen konzentrisch und zylindrisch ausgeführt. Er kann, um eine Art radiale Einfederung des elastischen Stützrings zu ermöglichen, auch in tangentialer Richtung polygonartig ausgeführt und/oder in axialer Richtung unter- oder überwölbt, also örtlich vertieft, ausgeführt sein. Damit wird die radiale Nachgiebigkeit des elastischen Stützrings erhöht, um eine noch höhere Stoßenergieaufnahme durch die Tilgermassen 200 zu ermöglichen. Hierdurch kann es gegebenenfalls möglich sein, eine fast vollständige Schallabsorption ohne ein Auflageklappern zu ermöglichen. Dieses kann beispielsweise auftreten, wenn die Tilgerkörper 200 beim Abstellen des Motors mangels Fliehkraft nach radial innen fallen und hierdurch Klappergeräusche verursachen, wenn die Aufschlagdämpfung nicht ausreicht.

Der axial sehr weit ausfüllbare Stützring 340 ist auch lose einlegbar, kann aber auch axial und radial spielfrei verbaut sein. Die axiale Führung des Stützrings 340 erfolgt zwischen der motorseitigen Nabenscheibe 160, die radial außen im druckfederbeaufschlagten Bereich axial durch Umlegen vorverbreitert ist, und im sekundärseitigen Bahnblech, also dem zweiten Führungsbauteil 220, bzw. durch eine axiale Begrenzung im Sekundärschwungrad selbst.

Die Tilgermassen 200 können beispielsweise im Bereich zwischen mehreren 100 g und mehr als 1 kg variieren. Ihr Schwerpunktradius kann sich beispielsweise im Bereich zwischen einigen 10 und einigen 100 mm im Falle einer Ausführung für einen Personenkraftwagen bewegen.

Bei den in den Fig. 19 bis 30 gezeigten Dämpferanordnungen 100 erfolgt so die Anordnung des drehzahladaptiven Tilgers, also dem Tilgerschwingungsdämpfer 110, nahe an dem Radiallager 670 der Zweimassenschwungradanordnung 120 außerhalb der Kurbelwellenverschraubung. Dies kann je nach konkreter Implementierung einen Funktions- und/oder Lebensdauervorteil ermöglichen. So kann beispielsweise durch diese Anordnung eine Erhöhung der Tilgermassen aufgrund eines gewonnenen oder besser genutzten Bauraums erzielbar sein. Ebenso kann es möglich sein, durch eine Reduzierung der Flächenpressung des entsprechenden Axiallagers 690 der Zweimassenschwungradanordnung 120 den zuvor genannten Lebensdauervorteil zu erzielen. Es kann so eine Funktionsintegration gegebenenfalls erzielbar sein. So weisen die Dämpferanordnungen 100 der betreffenden Figuren eine axiale Fortsetzung des Sekundärschwungrads (Aufnahmeabschnitt 330) auf, die am Innendurchmesser Aufnahmen für das Radiallager 670 bzw. Lager 660, und am Außendurchmesser den Stützring 340 tragen.

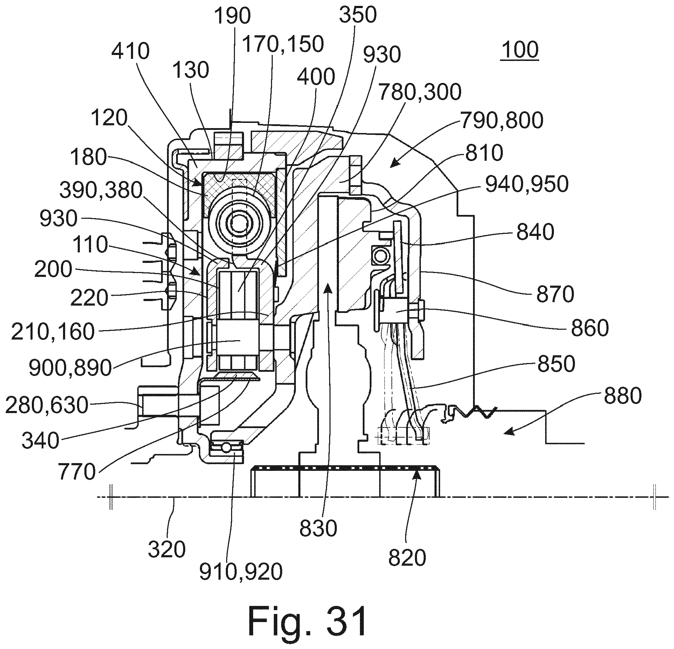

Fig. 31 zeigt eine Querschnittsdarstellung durch eine weitere Dämpferanordnung 100, die wiederum einen Tilgerschwingungsdämpfer 110 und eine Zweimassenschwungradanordnung 120 umfasst. Diese unterscheidet sich jedoch im Hinblick auf einige Aspekte von den zuvor gezeigten. Hierbei wird im Folgenden im Wesentlichen auf die Unterschiede das Augenmerk gelegt.

So ist die Sekundärschwungmasse 300 der Dämpferanordnung 100 im vorliegenden Ausführungsbeispiel als Schwungrad 780 eines Anfahrelements 790 bzw. Anfahrkupplung 800 ausgebildet, an die über eine Druckplatte 810 eine in Fig. 31 nicht dargestellte Reibscheibe oder Reibpaket anpressbar ist, um zwischen dem Schwungrad 780 und der Druckplatte 810 einen reibschlüssigen bzw. kraftschlüssigen Kontakt zu schaffen, über den ein Drehmoment von dem Schwungrad 780 auf eine Abtriebsnabe 820 übertragen ist. Die in Fig. 31 nicht dargestellte Reibscheibe bzw. Kupplungsscheibe ist in dem Freiraum 830 angeordnet und kann beispielsweise einen ein- oder mehrstufigen Torsionsdämpfer zusätzlich umfassen.

Um die für den Reibschluss bzw. Kraftschluss notwendige Anpresskraft zu erzielen, weist das Anfahrelement 790 ein Anfahrfederelement 840 auf, das beispielsweise als Tellerfeder oder Membranfeder implementiert sein kann. Mit diesem ist ein Ausrückhebel 850 mechanisch verbunden, der über eine Aufnahme 860 an einem Gehäusedeckel 870 drehbar bzw. verschwenkbar angelegt ist. Der Ausrückhebel 850 ist hierbei über ein nur schematisch in Fig. 31 eingezeichnetes Ausrückelement 880 ansteuerbar.

Die Dämpferanordnung 100 in Fig. 31 unterscheidet sich von den zuvor gezeigten ferner dadurch, dass die Nabenscheibe 160 zwar wiederum als erstes Führungsbauteil 210 ausgestaltet ist, und dass wiederum wenigstens eine Tilgermasse 200 zwischen dieser und einem zweiten Führungsbauteil 220 derart angeordnet ist, sodass in Abhängigkeit von der eingeleiteten Drehbewegung die wenigstens eine Tilgermasse 200 eine Schwingung ausführen kann, um einen Schwingungsanteil der Drehbewegung zu dämpfen, jedoch erfolgt die Drehmomentübertragung ausschließlich über das erste Führungsbauteil 210, also ausschließlich über die Nabenscheibe 160. Zwar sind auch hier über entsprechende Verbindungsstrukturen 890, die wiederum als Abstandsstücke 900 implementiert sind, die beiden Führungsbauteile 210, 220 miteinander verbunden, allerdings übertragen die Verbindungsstrukturen 890 bzw. die Abstandsstücke 900 im vorliegenden Fall nicht das Fahrmoment, sondern höchstens das Reaktionsmoment der Tilgermassen 200.

Jedoch sind auch hier die Tilgermassen 200 wieder aus mehreren, im vorliegenden Fall aus drei Einzeltilgermassen 350 aufgebaut.

Ähnlich der Implementierung in Fig. 28 ist auch hier der Stützring 340 über die Halterung 770 mit der Anbindungsstruktur 280 in Form der Kurbelwellenschraube 630 verbunden.

Im Unterschied zu den zuvor beschriebenen Dämpferanordnungen 100 ist hier jedoch zur radialen und axialen Führung zwischen Eingangsseite der Dämpferanordnung 100 und der sekundären Schwungmasse 300 ein einzelnes Lager 910 eingesetzt, das sowohl die axiale, wie auch die radiale Führung übernimmt. Das Lager 910 ist hierbei als Kugellager 920 ausgebildet, kann jedoch gegebenenfalls auch gegen andere Lagertechniken ausgetauscht werden. So kann es sich bei dem betreffenden Lager 910 beispielsweise auch um Tonnenlager, Kegelrollenlager oder andere entsprechende Lager handeln. Ebenso können wiederum Gleitlager eingesetzt werden.

Darüber hinaus unterscheidet sich die in Fig. 31 gezeigte Dämpferanordnung 100 von den zuvor gezeigten dadurch, dass die die Dichtungsstruktur 380 umfassende Spaltdichtung 390 durch das erste Führungsbauteil 210 und das zweite Führungsbauteil 220 ausgeformt ist. So erstrecken sich bei dem hier gezeigten Tilgerschwingungsdämpfer 110 sowohl das erste Führungsbauteil 210 wie auch das zweite Führungsbauteil 220 bezogen auf die Drehrichtung 320 radial über die Tilgermasse 200 nach radial außen und weisen dort jeweils einen axial verlaufenden Abschnitt 930 auf, der axial versetzt zu den Spalten zwischen den Tilgermassen 200 und den beiden Führungsbauteilen 210, 220 die Spaltdichtung 390 bildet. Anders ausgedrückt bilden das erste und das zweite Führungsbauteil 210, 220 durch ihre axial verlaufenden Abschnitte 930 im Bereich radial außerhalb, in axialer Richtung auf Höhe der Tilgermasse 200, die Spaltdichtung 390 aus. Bei anderen Ausführungsbeispielen kann je nach konkreter Implementierung hier gegebenenfalls auch nur eines der beiden Führungsbauteile 210, 220 einen entsprechenden axialen Abschnitt 930 aufweisen. Auch kann eines oder beide Führungsbauteile 210, 220 eine komplexere Struktur aufweisen, sodass diese anstelle einer einfachen Spaltdichtung 390 auch eine Labyrinthdichtung bilden. Bei den hier gezeigten Dämpferanordnungen 100 ist jedoch der Spalt bzw. die Labyrinthdichtung derart angeordnet, dass diese axial versetzt zu allen Spalten zwischen der Tilgermasse 200 und den Führungsbauteilen 210, 220 angeordnet ist. Hierbei sind gegebenenfalls auftretende Spalte zwischen den Einzeltilgermassen 350 der Tilgermasse 200 jedoch unerheblich.

Bei der in Fig. 31 gezeigte Dämpferanordnung 100 ist so die Nabenscheibe 160 rechtzeitig zum Tilgerkörper-Bauraum angeordnet. Als Folge wird das Fahrmoment direkt den sekundärseitigen Bauteilen zugeführt. Die Abstandsstücke 900 tragen so nur noch das linksseitig angeordnete zweite Führungsbauteil 220 (Bahnblech), sodass die Abstandsstücke 900 im Wesentlichen nur etwa 50 % des Tilgerreaktionsmoments übertragen müssen. Hierdurch können sie gegebenenfalls weniger massiv ausgebildet werden, was zu einer höheren Masse der Tilgermassen 200 führen kann, da so gegebenenfalls mehr Bauraum für diese zur Verfügung steht. Die Freistellungen der Tilgermassen 200 in Form der konkaven Konturen 430 stellen so grundsätzlich einen Masseverlust gegenüber einer Tilgermasse 200 dar, bei der eine solche Freistellung gegebenenfalls entfallen kann.

Die Spaltdichtung 390 wird hierbei derart gebildet, dass das linke Bahnblech im Außendurchmesserbereich axial zu dem axial verlaufenden Abschnitt 930 abgewinkelt wird. Hierdurch wird erreicht, dass aus dem Fettraum nach radial innen spritzendes Schmiermittel (z. B. Fett) nicht in die Axialspalte zwischen den Tilgermassen 200 und den Führungsbauteilen 210, 220 bzw. der Nabenscheibe 160 gelangen kann. Der abgewinkelte Bahnblechkragen (axial verlaufender Abschnitt 930) überdeckt hierbei den linken Axialspalt. Der axial verlaufende Abschnitt 930 (Kragen) kann optional axial bis auf Luft (im Wesentlichen verschwindender Abstand) oder bis auf einen minimalen Spalt an die Nabenscheibe 160 herangeführt. Ein Federelement 940, das beispielsweise als Tellerfeder 950 ausgeführt sein kann, dient hier zur weiteren Abdichtung des Fettraums gegenüber dem Gehäuse 130 bzw. dem Abdeckblech 400. Zu diesem Zweck kann das Federelement 940 an der Nabenscheibe 160 bzw. dem ersten Führungsbauteil 210 oder auch dem Abdeckblech 400 bzw. dem Gehäuse 130 befestigt sein. Grundsätzlich kann auch eine unbefestigte, jedoch radial geführte Ausformung implementiert werden.

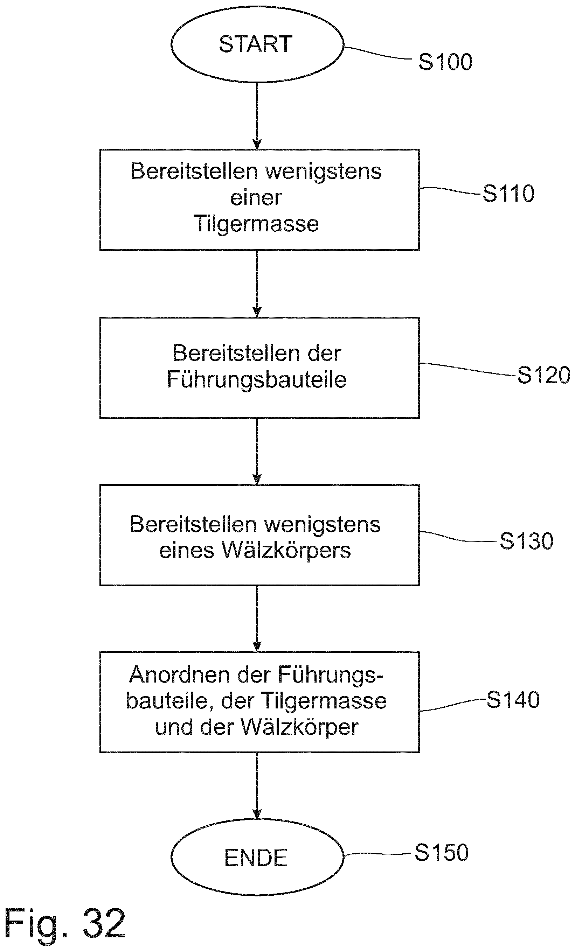

Fig. 32 zeigt schließlich ein Flussdiagramm eines Verfahrens zum Bereitstellen eines Tilgerschwingungsdämpfers 110, der wiederum beispielsweise für einen Antriebsstrang eines Kraftfahrzeugs genutzt werden kann, und zur Dämpfung eines Schwingungsanteils einer Drehbewegung geeignet ist. Nach einem Start des Verfahrens in einem Schritt S100 wird zunächst in einem Schritt S110 wenigstens eine Tilgermasse bereitgestellt, die ausgebildet ist, um in Abhängigkeit von der Drehbewegung eine Schwingung auszuführen, um den Schwingungsanteil derselben zu dämpfen. In einem Schritt S120 werden das erste Führungsbauteil 210 und das zweite Führungsbauteil 220 bereitgestellt, bevor in einem Schritt S130 wenigstens ein Wälzkörper 230 bereitgestellt wird. Der wenigstens eine Wälzkörper 230 weist hierbei zu beiden Seiten einer senkrecht zu der Rotationsachse 360 verlaufenden, den betreffenden Wälzkörper 230 schneidenden Ebene 540 jeweils einen Bund 530 auf, die ihrerseits ausgebildet sind, um mit dem ersten bzw. dem zweiten Führungsbauteil 210, 220 in Kontakt zu tre-ten, um den Wälzkörper 230 entlang der Rotationsachse 360 zu führen. Ein Durchmesser des betreffenden Wälzkörpers 230 nimmt hierbei von einem Wert an der Ebene 540 zu einem kleineren Wert an seinen beiden Enden entlang der Rotationsachse 360 nicht zu.

Anschließend werden in einem Schritt S140 die Führungsbauteile 210, 220, die wenigstens eine Tilgermasse 200 und der wenigstens eine Wälzkörper 230 derart angeordnet, sodass sich das erste Führungsbauteil 210 und das zweite Führungsbauteil 220 im Wesentlichen parallel zueinander erstrecken und die wenigstens eine Tilgermasse 200 zwischen dem ersten und dem zweiten Führungsbauteil 210, 220 über den Wälzkörper 230 beweglich angeordnet ist. Das Verfahren endet in einem Schritt S150. Das Verfahren, dessen Flussdiagramm in Fig. 32 dargestellt ist, ermöglicht so das Bereitstellen eines Tilgerschwingungsdämpfers, wie dieser zuvor beschrieben wurde. Die Schritte des einzelnen Verfahrens sind hierbei nicht notwendigerweise in der angegebenen Reihenfolge durchzuführen. Diese können zum Teil gleichzeitig oder zeitlich überlappend ausgeführt werden. Ebenso können sie in abweichenden Reihenfolgen durchgeführt werden, sofern dies möglich ist.

Bei einem solchen Verfahren kann das Bereitstellen des Wälzkörpers beispielsweise ein Formen mittels Kaltfließprozess umfassen. Ergänzend oder alternativ kann das Bereitstellen der Tilgermasse 200 ein Stanzen wenigstens einer einzelnen Tilgermasse und gegebenenfalls ein Zusammenfügen mehrerer Einzeltilgermassen 350 zu einer Tilgermasse 200 umfassen. Ebenso ergänzend oder alternativ kann das Bereitstellen der Tilgermasse 200 ein Vormontieren des bereitgestellten Wälzkörpers 230 an der Tilgermasse 200 umfassen.

Selbstverständlich können bei anderen Ausführungsbeispielen auch andere Befestigungsmethoden einzelner Komponenten miteinander verwendet werden. Ebenso können Komponenten, Baugruppen und andere Bauteile, wie etwa die Wälzkörper 230, die Tilgermassen 200 oder die Einzeltilgermassen 350, bei anderen Ausführungsbeispielen hinsichtlich Form, Anzahl, Anordnung und anderer Parameter unterscheiden.

Ausführungsbeispiele können es ermöglichen, einen Kompromiss zwischen einem Bauraum, einer Charakteristik, einer Belastbarkeit und anderer Parameter einer Dämpferanordnung 100 zu verbessern.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichen

- 100: Dämpferanordnung
- 110: Tilgerschwingungsdämpfer
- 120: Zweimassenschwungradanordnung
- 130: Gehäuse
- 140: Anlagebauteil
- 150: Federanordnung
- 160: Nabenscheibe
- 170: Federelement
- 180: Zwischenbauteil
- 190: Innenlaufbahn
- 200: Tilgermasse
- 210: erstes Führungsbauteil
- 220: zweites Führungsbauteil
- 230: Wälzkörper
- 240: Verbindungsstruktur
- 250: Abstandsstück
- 260: abtriebsseitiges Bauteil
- 270: Abtriebsnabe
- 280: Anbindungsstruktur
- 290: Nietverbindung
- 300: sekundäre Schwungmasse
- 310: umgebogener Abschnitt
- 320: Drehachse
- 330: Aufnahmeabschnitt
- 340: Stützring
- 350: Einzeltilgermasse
- 360: Rotationsachse
- 370: durchgehende Ausnehmung
- 380: Dichtungsstruktur
- 390: Spaltdichtung
- 400: Abdeckblech
- 410: Gehäuseschale
- 420: Abschnitt
- 430: konkave Kontur
- 440: Führungslaufbahn
- 450: Laufbahn
- 460: Führungslaufbahn
- 470: weitere Laufbahn
- 480: Passstift
- 490: Passbohrung
- 500: durchgehende Teilausnehmung
- 510: zentraler Abschnitt
- 520: weiterer Bund
- 530: Bund
- 540: Ebene
- 550: axiale Ausnehmung
- 560: Freistich
- 570: Bereich
- 580: Bereich
- 590: Übergangsbereich
- 600: Dichtungsring
- 610: Labyrinthdichtung
- 620: Schmiermitteleinfüllöffnung
- 630: Kurbelwellenschraube
- 640: Zapfen
- 650: axialer Abschnitt
- 660: Lager
- 670: Radiallager
- 680: weiteres Lager
- 690: Axiallager
- 700: Haltebauteil
- 710: Ausstellung
- 720: Dichtungsfederelement
- 730: Tellerfeder
- 740: berührende Dichtung
- 750: Dichtlippe
- 760: Nut
- 770: Halterung
- 780: Schwungrad
- 790: Anfahrelement
- 800: Anfahrkupplung
- 810: Druckplatte
- 820: Abtriebsbauteil
- 830: Freiraum
- 840: Anfahrfederelement
- 850: Ausrückhebel
- 860: Aufnahme
- 870: Gehäusedeckel
- 880: Ausrückelement
- 890: Verbindungsstruktur
- 900: Abstandsstück
- 910: Lager
- 920: Kugellager
- 930: axial verlaufender Abschnitt
- 940: Federelement
- 950: Tellerfeder

- S100: Start
- S110: Bereitstellen wenigstens einer Tilgermasse
- S120: Bereitstellen der Führungsbauteile
- S130: Bereitstellen wenigstens eines Wälzkörpers
- S140: Anordnen der Führungsbauteile, der Tilgermasse und der Wälzkörper
- S150: Ende

## Patentansprüche

1. Tilgerschwingungsdämpfer (110), beispielsweise für einen Antriebsstrang eines Kraftfahrzeugs, zur Dämpfung eines Schwingungsanteils einer Drehbewegung und Übertragung eines Drehmoments der Drehbewegung, mit folgenden Merkmalen:
wenigstens einer Tilgermasse (200), die derart ausgebildet ist, um in Abhängigkeit von der Drehbewegung eine Schwingung auszuführen, um den Schwingungsanteil derselben zu dämpfen;
einem ersten Führungsbauteil (210) und einem sich im Wesentlichen parallel zu dem ersten Führungsbauteil (210) erstreckenden zweiten Führungsbauteil (220), zwischen denen die Tilgermasse (200) beweglich angeordnet ist; und
wenigstens einer Verbindungsstruktur (240), die das erste Führungsbauteil (210) und das zweite Führungsbauteil (220) im Wesentlichen drehfest miteinander verbindet,
wobei das erste Führungsbauteil (210), das zweite Führungsbauteil (220) und die Verbindungsstruktur (240) derart ausgebildet sind, sodass das Drehmoment über die Verbindungsstruktur (240) übertragen wird,
**dadurch gekennzeichnet, dass**
eine Nabenscheibe (160) einer Zweimassenschwungradanordnung (120) als das erste Führungsbauteil (210) ausgeführt ist, wobei die Nabenscheibe (160) über wenigstens eine Federanordnung (150) mit einer Eingangsseite der Zweimassenschwungradanordnung (120) derart gekoppelt ist, sodass das Drehmoment von der Eingangsseite über die wenigstens eine Federanordnung (150) zu der Nabenscheibe (160) übertragen wird; und
eine ausgangsseitige Schwungmasse (300) der Zweimassenschwungradanordnung (120) mit dem zweiten Führungsbauteil (220) gekoppelt ist oder bei dem die ausgangsseitige Schwungmasse (300) der Zweimassenschwungradanordnung (120) als zweites Führungsbauteil (220) ausgestaltet ist.

2. Tilgerschwingungsdämpfer (110) nach Anspruch 1, bei dem die wenigstens eine Verbindungsstruktur (240) wenigstens ein Abstandsstück (250), beispielsweise eine Abstandshülse, umfasst, das mit dem ersten (210) und dem zweiten Führungsbauteil (220) verbunden ist.

3. Tilgerschwingungsdämpfer (110) nach einem der vorhergehenden Ansprüche, bei dem die wenigstens eine Verbindungsstruktur (240) wenigstens einen Verbindungsabschnitt des ersten (210) oder des zweiten Führungsbauteils (220) umfasst, der mit dem anderen Führungsbauteil in Anlage steht und mit dem anderen Führungsbauteil drehfest verbunden ist.

4. Tilgerschwingungsdämpfer (110) nach einem der vorhergehenden Ansprüche, bei dem die drehfeste Verbindung eine Nietverbindung, eine Schweißverbindung und/oder eine Passstiftverbindung (480) umfasst.

5. Tilgerschwingungsdämpfer (110) nach einem der vorhergehenden Ansprüche, bei dem das zweite Führungsbauteil (220) mit einem abtriebsseitigen Bauteil (260) des Tilgerschwingungsdämpfers (110), beispielsweise einer Abtriebsnabe (270), derart gekoppelt ist oder dieses derart umfasst, sodass das Drehmoment an das abtriebsseitige Bauteil (260) übertragbar ist.

6. Tilgerschwingungsdämpfer (110) nach einem der vorhergehenden Ansprüche, der ferner wenigstens einen Wälzkörper (230) umfasst, wobei das erste Führungsbauteil (210) und das zweite Führungsbauteil (220) jeweils wenigstens eine Führungslaufbahn (440) umfassen, die zusammen mit der Tilgermasse (200) derart ausgebildet sind, dass die Tilgermasse (200) durch ein Abrollen des wenigstens einen Wälzkörpers (230) auf den Führungslaufbahnen (440) der Führungsbauteile (210, 220) geführt wird.

7. Tilgerschwingungsdämpfer (110) nach Anspruch 8, bei dem die Tilgermasse (200) eine Führungslaufbahn (460) aufweist, die zu den Führungslaufbahnen (440) des ersten und des zweiten Führungsbauteils (220) korrespondiert und an der der wenigstens eine Wälzkörper (230) bei dem Abrollen auf den Führungslaufbahnen (440) des ersten (210) und des zweiten Führungsbauteils (220) seinerseits abrollt, wobei die Führungslaufbahnen (440, 460) der Tilgermasse (200) und des ersten (210) und des zweiten Führungsbauteils (220) derart ausgebildet sind, sodass sich bei einer Auslenkung der Tilgermasse (220) in einer Umfangsrichtung des Tilgerschwingungsdämpfers (110) relativ zu den Führungsbauteilen (210, 220) eine Verlagerung des Schwerpunkts der Tilgermasse (220) entlang einer radialen Richtung ergibt.

8. Tilgerschwingungsdämpfer (110) nach einem der vorhergehenden Ansprüche, bei dem das erste (210) und das zweite Führungsbauteil (220) derart ausgebildet sind, um den Tilgerschwingungsdämpfer (120) entlang der Drehachse (320) zu begrenzen.

9. Tilgerschwingungsdämpfer (110) nach einem der vorhergehenden Ansprüche, bei dem das erste (210) und/oder das zweite Führungsbauteil (220) aus einem blechartigen Werkstück hergestellt sind.

10. Dämpferanordnung (100), beispielsweise für einen Antriebsstrang eines Kraftfahrzeugs, zur Dämpfung eines Schwingungsanteils einer Drehbewegung und Übertragung eines Drehmoments von einer Eingangsseite zu einer Ausgangsseite der Dämpferanordnung (100), mit folgenden Merkmalen:
einem Tilgerschwingungsdämpfer (110) nach einem der vorhergehenden Ansprüche,
einem Aufnahmeabschnitt (330), der mit dem wenigstens einen Führungsbauteil (210, 220) des Tilgerschwingungsdämpfers (110) drehfest gekoppelt ist und sich im Wesentlichen entlang einer Drehachse (320) der Drehbewegung erstreckt;
einem axialen Abschnitt (650), der mit der Eingangsseite oder der Ausgangsseite einer Dämpferanordnung (100) drehfest gekoppelt ist und sich im Wesentlichen entlang einer Drehachse (320) der Drehbewegung erstreckt; und
einem Lager (660), das zwischen dem axialen Abschnitt (650) und dem Aufnahmeabschnitt (330) angeordnet und ausgebildet ist, um den axialen Abschnitt (650) und den Aufnahmeabschnitt (330) bezogen auf die Drehachse (320) radial zu führen.

11. Dämpferanordnung (100) nach Anspruch 10, die ferner einen Stützring (340) aufweist, der den Aufnahmeabschnitt (330) radial umschließt und derart angeordnet und ausgebildet ist, um mit der wenigstens einen Tilgermasse (200) bei einem Stillstand der Dämpferanordnung (100) in Kontakt zu treten und ein hierbei entstehendes Geräusch zu dämpfen.

12. Dämpferanordnung (100) nach Anspruch 11, bei dem der Stützring (340) eine Erstreckung entlang der Drehachse (320) aufweist, die wenigstens 50 % einer Erstreckung der Tilgermasse (200) entlang der Drehachse (320) entspricht.

13. Dämpferanordnung (100) nach einem der Ansprüche 10 bis 12, bei der ein radialer Abstand des Lagers (660) von der Drehachse (320) wenigstens 80 % eines kleinsten radialen Abstandes der Tilgermasse (200) des Tilgerschwingungsdämpfers (110) von der Drehachse (320) während des Betriebs der Dämpferanordnung (100) aufweist.

14. Dämpferanordnung (100) nach einem der Ansprüche 10 bis 13, die ferner eine Zweimassenschwungradanordnung (120) umfasst, die eine Eingangsseite, eine Ausgangsseite und wenigstens eine Federanordnung (150) umfasst, die derart ausgebildet sind, sodass das Drehmoment von der Eingangsseite der Zweimassenschwungradanordnung (120) über die wenigstens eine Federanordnung (150) zu der Ausgangsseite der Zweimassenschwungradanordnung (120) übertragen wird, wobei der Tilgungsschwingungsdämpfer (110) und die Zweimassenschwungradanordnung (120) derart angeordnet sind, sodass die wenigstens eine Tilgermasse (200) bezogen auf eine Drehachse (320) der Drehbewegung radial weiter innen liegt als die wenigstens eine Federanordnung (150).

## Claims

1. Tuned mass damper (110), for example for a drive train of a motor vehicle, for damping an oscillation component of a rotary movement and for transmitting a torque of the rotational movement, having the following features:
at least one damper mass (200), which is formed in such a way as to execute an oscillation, depending on the rotational movement, in order to damp the oscillation component of the said oscillation;
a first guide component (210) and a second guide component (220) extending substantially parallel to the first guide component (210), between which the damper mass (200) is movably arranged; and
at least one connecting structure (240), which connects the first guide component (210) and the second guide component (220) to each other in a substantially rotationally fixed manner,
the first guide component (210), the second guide component (220) and the connecting structure (240) being formed in such a way that the torque is transmitted via the connecting structure (240),
**characterized in that**
a hub disc (160) of a dual-mass flywheel assembly (120) is implemented as the first guide component (210), wherein the hub disc (160) is coupled via at least one spring assembly (150) to an input side of the dual-mass flywheel assembly (120) in such a way that the torque is transmitted from the input side to the hub disc (160) via the at least one spring assembly (150); and
a flywheel mass (300) on the output side of the dual-mass flywheel assembly (120) is coupled to the second guide component (220), or in which the flywheel mass (300) on the output side of the dual-mass flywheel assembly (120) is configured as a second guide component (220).

2. Tuned mass damper (110) according to Claim 1, in which the at least one connecting structure (240) comprises at least one spacer (250), for example a spacer sleeve, which is connected to the first (210) and the second guide component (220).

3. Tuned mass damper (110) according to one of the preceding claims, in which the at least one connecting structure (240) comprises at least one connecting section of the first (210) or of the second guide component (220), which is in contact with the other guide component and is rotationally fixedly connected to the other guide component.

4. Tuned mass damper (110) according to one of the preceding claims, in which the rotationally fixed connection comprises a riveted connection, a welded connection and/or a dowel connection (480).

5. Tuned mass damper (110) according to one of the preceding claims, in which the second guide component (220) is coupled to a component (260) on the output side of the tuned mass damper (110), for example an output hub (270), in such a way or comprises the latter in such a way that the torque can be transmitted to the component (260) on the output side.

6. Tuned mass damper (110) according to one of the preceding claims, which further comprises at least one rolling element (230), wherein the first guide component (210) and the second guide component (220) each comprise at least one guide raceway (440) which, together with the damper mass (200), are formed in such a way that the damper mass (200) is guided by the at least one rolling element (230) rolling on the guide raceways (440) of the guide components (210, 220).

7. Tuned mass damper (110) according to Claim 8, in which the damper mass (200) has a guide raceway (460) which corresponds to the guide raceways (440) of the first and of the second guide component (220) and on which the at least one rolling element (230) in turn rolls when rolling on the guide raceways (440) of the first (210) and of the second guide component (220), wherein the guide raceways (440, 460) of the damper mass (200) and of the first (210) and of the second guide component (220) are formed in such a way that in the event of a deflection of the damper mass (220) in a circumferential direction of the tuned mass damper (110) relative to the guide components (210, 220), the result is a displacement of the centre of gravity of the damper mass (220) along a radial direction.

8. Tuned mass damper (110) according to one of the preceding claims, in which the first (210) and the second guide component (220) are formed in such a way as to delimit the tuned mass damper (120) along the axis of rotation (320).

9. Tuned mass damper (110) according to one of the preceding claims, in which the first (210) and/or the second guide component (220) are produced from a sheet-like workpiece.

10. Damper assembly (100), for example for a drive train of a motor vehicle, for damping an oscillation component of a rotational movement and for transmitting a torque from an input side to an output side of the damper assembly (100), having the following features:
a tuned mass damper (110) according to one of the preceding claims,
a receiving portion (330), which is rotationally fixedly coupled to the at least one guide component (210, 220) of the tuned mass damper (110) and extends substantially along an axis of rotation (320) of the rotational movement;
an axial portion (650), which is rotationally fixedly coupled to the input side or the output side of a damper assembly (100) and extends substantially along an axis of rotation (320) of the rotational movement; and
a bearing (660), which is arranged between the axial portion (650) and the receiving portion (330) and is designed to guide the axial portion (650) and the receiving section (330) radially relative to the axis of rotation (320).

11. Damper assembly (100) according to Claim 10, which further has a supporting ring (340), which encloses the receiving portion (330) radially and is arranged and formed in such a way as to come into contact with the at least one damper mass (200) when the damper assembly (100) is at a standstill, and to damp a resultant noise.

12. Damper assembly (100) according to Claim 11, in which the supporting ring (340) has an extent along the axis of rotation (320) which corresponds to at least 50% of an extent of the damper mass (200) along the axis of rotation (320).

13. Damper assembly (100) according to one of Claims 10 to 12, in which a radial distance of the bearing (660) from the axis of rotation (320) is at least 80% of a smallest radial distance of the damper mass (200) of the tuned mass damper (110) from the axis of rotation (320) during the operation of the damper assembly (100).

14. Damper assembly (100) according to one of Claims 10 to 13, which further comprises a dual-mass flywheel assembly (120), which comprises an input side, an output side and at least one spring assembly (150), which are formed in such a way that the torque from the input side of the dual-mass flywheel assembly (120) is transmitted via the at least one spring assembly (150) to the output side of the dual mass flywheel assembly (120), wherein the tuned mass damper (110) and the dual-mass flywheel assembly (120) are arranged in such a way that the at least one damper mass (200) is located radially further in than the at least one spring assembly (150), relative to an axis of rotation (320) of the rotational movement.

## Revendications

1. Amortisseur d'oscillations (110), par exemple pour une chaîne cinématique d'un véhicule automobile, pour amortir une partie oscillante d'un mouvement de rotation et pour transférer un couple du mouvement de rotation, comprenant les caractéristiques suivantes :
au moins une masse d'amortissement (200) qui est réalisée pour effectuer une oscillation en fonction du mouvement de rotation afin d'amortir la partie oscillante de celui-ci ;
un premier composant de guidage (210) et un deuxième composant de guidage (220) s'étendant essentiellement parallèlement au premier composant de guidage (210), entre lesquels la masse d'amortissement (200) est disposée de manière déplaçable ; et
au moins une structure de liaison (240) qui relie l'un à l'autre essentiellement de manière solidaire en rotation le premier composant de guidage (210) et le deuxième composant de guidage (220),
le premier composant de guidage (210), le deuxième composant de guidage (220) et la structure de liaison (240) étant réalisés de telle sorte que le couple soit transmis par le biais de la structure de liaison (240),
**caractérisé en ce que**
un disque de moyeu (160) d'un agencement de volant d'inertie à deux masses (120) est réalisé en tant que premier composant de guidage (210), le disque de moyeu (160) étant accouplé par le biais d'au moins un agencement de ressort (150) à un côté d'entrée de l'agencement de volant d'inertie à deux masses (120) de telle sorte que le couple soit transmis depuis le côté d'entrée par le biais de l'au moins un agencement de ressort (150) au disque de moyeu (160) ; et
une masse d'inertie côté sortie (300) de l'agencement de volant d'inertie à deux masses (120) est accouplée au deuxième composant de guidage (220) ou dans lequel la masse d'inertie côté sortie (300) de l'agencement de volant d'inertie à deux masses (120) est configurée en tant que deuxième composant de guidage (220).

2. Amortisseur d'oscillations (110) selon la revendication 1, dans lequel l'au moins une structure de liaison (240) comprend au moins une pièce d'espacement (250), par exemple une douille d'espacement, qui est reliée au premier (210) et au deuxième (220) composant de guidage.

3. Amortisseur d'oscillations (110) selon l'une quelconque des revendications précédentes, dans lequel l'au moins une structure de liaison (240) comprend au moins une portion de liaison du premier (210) ou du deuxième (220) composant de guidage, qui est en appui avec l'autre composant de guidage et qui est connectée de manière solidaire en rotation à l'autre composant de guidage.

4. Amortisseur d'oscillations (110) selon l'une quelconque des revendications précédentes, dans lequel la liaison solidaire en rotation comprend une liaison rivetée, une liaison soudée et/ou une liaison par goujon (480).

5. Amortisseur d'oscillations (110) selon l'une quelconque des revendications précédentes, dans lequel le deuxième composant de guidage (220) est accouplé à un composant côté prise de force (260) de l'amortisseur d'oscillations (110), par exemple un moyeu de prise de force (270), ou comprend celui-ci de telle sorte que le couple puisse être transmis au composant côté prise de force (260).

6. Amortisseur d'oscillations (110) selon l'une quelconque des revendications précédentes, comprenant en outre au moins un corps de roulement (230), le premier composant de guidage (210) et le deuxième composant de guidage (220) comprenant à chaque fois au moins un chemin de roulement de guidage (440), lesquels sont réalisés conjointement avec la masse d'amortissement (200) de telle sorte que la masse d'amortissement (200) soit guidée par un roulement d'au moins un corps de roulement (230) sur les chemins de roulement de guidage (440) des composants de guidage (210, 220) .

7. Amortisseur d'oscillations (110) selon la revendication 8, dans lequel la masse d'oscillations (200) présente une un chemin de roulement de guidage (460) qui correspond aux chemins de roulement de guidage (440) du premier et du deuxième composant de guidage (220) et sur lequel roule l'au moins un corps de roulement (230) lors du roulement sur les chemins de roulement de guidage (440) du premier (210) et du deuxième (220) composant de guidage, les chemins de roulement de guidage (440, 460) de la masse d'amortissement (200) et du premier (210) et du deuxième (220) composant de guidage étant réalisés de telle sorte que lors d'une déviation de la masse d'amortissement (220) dans une direction périphérique de l'amortisseur d'oscillations (110) par rapport aux composants de guidage (210, 220), il se produise un décalage du centre de gravité de la masse d'amortissement (220) le long d'une direction radiale.

8. Amortisseur d'oscillations (110) selon l'une quelconque des revendications précédentes, dans lequel le premier (210) et le deuxième (220) composant de guidage sont réalisés de manière à limiter l'amortisseur d'oscillations (120) le long de l'axe de rotation (320).

9. Amortisseur d'oscillations (110) selon l'une quelconque des revendications précédentes, dans lequel le premier (210) et/ou le deuxième (220) composant de guidage sont fabriqués à partir d'une pièce de type tôle.

10. Agencement d'amortisseur (100), par exemple pour une chaîne cinématique d'un véhicule automobile, pour amortir une partie oscillante d'un mouvement de rotation et transférer un couple d'un côté d'entrée à un côté de sortie de l'agencement d'amortisseur (100), comprenant les caractéristiques suivantes :
un amortisseur d'oscillations (110) selon l'une quelconque des revendications précédentes,
une portion de réception (330) qui est accouplée de manière solidaire en rotation à l'au moins un composant de guidage (210, 220) de l'amortisseur d'oscillations (110) et qui s'étend essentiellement le long d'un axe de rotation (320) du mouvement de rotation ;
une portion axiale (650) qui est accouplée de manière solidaire en rotation au côté d'entrée et/ou au côté de sortie d'un agencement d'amortisseur (100) et qui s'étend essentiellement le long d'un axe de rotation (320) du mouvement de rotation ; et
un palier (660) qui est disposé entre la portion axiale (650) et la portion de réception (330) et qui est réalisé pour guider radialement la portion axiale (650) et la portion de réception (330) par rapport à l'axe de rotation (320).

11. Agencement d'amortisseur (100) selon la revendication 10, qui présente en outre une bague de support (340) qui entoure radialement la portion de réception (330) et qui est disposée et réalisée de manière à venir en contact avec l'au moins une masse d'amortissement (200) à l'arrêt de l'agencement d'amortisseur (100) et à amortir un bruit produit dans ce cas.

12. Agencement d'amortisseur (100) selon la revendication 11, dans lequel la bague de support (340) présente une étendue le long de l'axe de rotation (320) qui correspond à au moins 50 % d'une étendue de la masse d'amortissement (200) le long de l'axe de rotation (320).

13. Agencement d'amortisseur (100) selon l'une quelconque des revendications 10 à 12, dans lequel une distance radiale du palier (660) à l'axe de rotation (320) présente au moins 80 % d'une distance radiale la plus petite de la masse d'amortissement (200) de l'amortisseur d'oscillations (110) à l'axe de rotation (320) pendant le fonctionnement de l'agencement d'amortisseur (100).

14. Agencement d'amortisseur (100) selon l'une quelconque des revendications 10 à 13, comprenant en outre un agencement de volant d'inertie à deux masses (120) qui comprend un côté d'entrée, un côté de sortie et au moins un agencement de ressort (150), qui sont réalisés de telle sorte que le couple soit transféré du côté d'entrée de l'agencement de volant d'inertie à deux masses (120) par le biais de l'au moins un agencement de ressort (150) au côté de sortie de l'agencement de volant d'inertie à deux masses (120), l'amortisseur d'oscillations (110) et l'agencement de volant d'inertie à deux masses (120) étant disposés de telle sorte que l'au moins une masse d'amortissement (200) soit située radialement plus vers l'intérieur par rapport à un axe de rotation (320) du mouvement de rotation que l'au moins un agencement de ressort (150).
